# EUROPÄISCHE PATENTSCHRIFT

(11) **EP 3 484 957 B1**
(45) Veröffentlichungstag und Bekanntmachung des Hinweises auf die Patenterteilung: **26.05.2021**
(21) Anmeldenummer: 17736678.8
(22) Anmeldetag: 10.07.2017
(51) Int. Cl.: C08L 77/06

(54) **LEITFÄHIGE THERMOPLASTISCHE POLYAMIDFORMMASSE**
CONDUCTIVE THERMOPLASTIC POLYAMIDE MOULDING MATERIAL
MASSES DE FORMAGE POLYAMIDES THERMOPLASTIQUES ELECTROCONDUCTRICES

(30) Priorität: 13.07.2016 EP 16179233
(43) Veröffentlichungstag der Anmeldung: 22.05.2019
(73) Patentinhaber: EMS-CHEMIE AG, 7013 Domat/Ems (CH)
(72) Erfinder: LAMBERTS, Nikolai, 7402 Bonaduz (CH); BAYER, Andreas, 7013 Domat / Ems (CH)
(74) Vertreter: Bremi, Tobias Hans
(86) Internationale Anmeldenummer: PCT/EP2017/067241
(87) Internationale Veröffentlichungsnummer: WO 2018/011131

(56) Entgegenhaltungen:
- JP-A- 2008 179 753
- US-A1- 2016 168 381

## Beschreibung

### TECHNISCHES GEBIET

Die vorliegende Erfindung betrifft leitfähige thermoplastische Polyamidformmassen, insbesondere auf Basis von teilkristallinen teilaromatischen Polyamiden, sowie daraus hergestellte Formteile und die Verwendung von derartigen Polyamidformmassen beispielsweise für Anwendungen im Automobilbereich, insbesondere im Zusammenhang mit der Treibstoffversorgung und im Kontakt zu Treibstoffen.

### STAND DER TECHNIK

Kunststoffe, darunter unter anderem Polyamide, haben sich als hochwertige Materialien z.B. auch im Automobilbereich durchgesetzt. Insbesondere teilaromatische Polyamide zeichnen sich durch gute mechanische Eigenschaften, auch bei hohen Temperaturen, wie sie in modernen Motoren vorliegen, aus, und durch eine gute Beständigkeit gegenüber Chemikalien, insbesondere auch Treibstoffen, Kühlmitteln.

Aus der WO-A-2007139987 sind hybrid-verstärkte Thermoplaste bekannt, bei denen stets mehr als 50 Gew.-% der Formmasse durch Glas- und Carbonfasern gebildet werden und das Verhältnis von Glas- zu Carbonfasern im Bereich von 13:1 bis 1:1 liegt. In den Beispielen werden u.a. auch Formmassen auf Basis von Polyamiden gearbeitet. Die hochgefüllten Formmassen sind problematisch in der Verarbeitung und haben eine schlechte Oberflächenqualität.

Ebenfalls hochsteife und zähe Formmassen beschreibt die EP-A-1 788 027. Hier besteht die Polymer-Matrix aus einem Blend von PA66 und PA 6T/6I, wobei das aliphatische Polyamid die Hauptkomponente bildet. Die Formmassen sind verstärkt mit einer Mischung von Glasfasern und Carbonfasern, wobei das Mischungsverhältnis im Bereich von 80:20 bis 95:5 liegt. Damit ist die Wärmeformbeständigkeit (HDT C gemäss ISO 75) aufgrund der überwiegend aliphatischen Matrix auf tiefem Niveau.

EP-A-3 006 506 betrifft hinsichtlich Fliessfähigkeit mittels Ethylen-Vinylacetat-Copolymeren modifizierte, hochschmelzende Polyamide. Gearbeitet werden teilaromatische Polyamide 6T/66 und 6T/6I, die mit Glasfasern verstärkt sind und als weitere Additive Schlagzähmodifikatoren enthalten. Kombinationen von Glas- und Carbonfasern werden weder gearbeitet noch als bevorzugte Ausführungsform beschrieben. Zudem werden keine Anwendungen mit Benzinkontakt genannt.

WO-A-2015/011935, auch als EP-A-3 026 084 in Englisch, betrifft Formmassen auf Basis von teilaromatischen Polyamiden für den Einsatz u.a. im Bereich der Treibstoffversorgung von Automobilen. Die Formmassen sind glasfaserverstärkt und schlagzähmodifiziert und können darüber hinaus zusätzlich leitfähige Additive, wie z.B. Russ, Carbon-Nanotubes oder Kohlenstofffasern enthalten. Die im Beispiel mit Kohlenstofffasern elektrisch leitfähig eingestellte Formmasse hat zwar originär eine ausreichende Leitfähigkeit, verliert diese aber bei Lagerung in Benzin, insbesondere in methanolhaltigem Benzin. Dazu tragen entscheidend der geringe Glasfaseranteil und der nicht unerhebliche Zusatz an amorphem Polyamid bei.

JP-A-2008179753 beschreibt faserverstärkte Polyphthalamid-Formmassen für die Verwendung im Automobilbereich, insbesondere in Kontakt mit Treibstoffen. Die bevorzugten und in den Beispielen gearbeiteten Polyphthalamide beruhen auf längerkettigen Diaminen, insbesondere C9-Diaminen, und enthalten in den elektrisch leitfähigen Formmassen nur geringe Glasfaseranteile von höchstens 10 Gew.-%, wenn gleichzeitig Kohlefasern eingesetzt werden. In Kontakt mit Benzin, insbesondere methanolhaltigem Benzin steigt jedoch der elektrische Widerstand solcher Formmassen rasch an, so dass die Leitfähigkeit bereits nach kurzer Zeit ungenügend ist. JP-A-2000038505 beschreibt elektrisch leitfähige Polyphthalamid-Formmassen für die Verwendung im Automobilbereich. Teile, hergestellt aus diesen Formmassen sollen beständig gegen Calciumchlorid sein sowie eine gute elektrische Leitfähigkeit und Schweissbarkeit aufweisen. Der zwingend vorhandene Leitruss führt jedoch zu einer drastischen Reduktion der Bruchdehnung und der Schlagzähigkeit.

### DARSTELLUNG DER ERFINDUNG

Es ist entsprechend Aufgabe der vorliegenden Erfindung, ein dimensionsstabiles, gut verarbeitbares, bevorzugt zudem gut fliessfähiges Material mit möglichst dauerhafter elektrischer Leitfähigkeit und vorzugsweisser guter Oberfläche z.B. für Anwendungen in der Treibstoffversorgung (insb. zum Beispiel Quick-Konnektoren für Treibstoffleitungen), insbesondere in Kontakt mit methanolhaltigem Benzin, zur Verfügung zu stellen. Es soll dabei auf teilaromatischen teilkristallinen Polyamiden auf Basis von gut verfügbaren und verarbeitbaren, kurzkettigen aliphatischen Diaminen beruhen, die im Verarbeitungsprozess bekannt und in den Produkteigenschaften eingeführt und weit verbreitet sind. Diese Polyamide haben ausgezeichnete thermo-mechanische Eigenschaften und lassen sich kostengünstig herstellen.

PA6 und PA66 haben eine ungenügende Beständigkeit gegenüber Calciumchlorid und kommen somit nicht als Basispolymer für solche Anwendungen in Frage. Polyphthalamid-Materialien mit Leitfähigkeitsruss sind aufwändig in der Herstellung und weisen eine ungenügende Bruchdehnung auf. Polyphthalamid-Materialien mit langkettigen aliphatischen Diamin-Bausteinen haben zwar teilweise vorteilhafte Eigenschaften, die langkettigen Diamin-Bausteine sind aber schlecht verfügbar und sind im Verarbeitungsprozess nicht sehr bekannt und in den Produkteigenschaften ausser für Spezialanwendungen nicht eingeführt und weit verbreitet. Zudem resultieren für diese Polyamide hohe Herstellungskosten. Carbon Nano Tubes als Zuschlag zu solchen Polyamiden für solche Anwendungen ergeben ebenso eine geringe Leitfähigkeit und schlechte mechanische Eigenschaften. Mit Kohlenstofffasern allein leitfähig eingestellte Materialien verlieren die originär vorhandene Leitfähigkeit bei Lagerung in methanolhaltigem Benzin bei 60°C innerhalb von 100 h. Gefordert wird aber nach 5000 h (methanolhaltiges Benzin, insbesondere CM15, 60°C) ein Oberflächenwiderstand von kleiner gleich 1E+6 Ohm (d.h. 1x10⁶ Ohm), so dass über die gesamte Lebensdauer elektrostatische Aufladungen der treibstoffführenden Teile sicher vermieden werden können.

Dabei wird unter dem Begriff methanolhaltigem Treibstoff (Kraftstoff) oder methanolhaltigem Benzin ein Treibstoff für Kraftfahrzeuge verstanden, der neben übrigen Treibstoffbestandteilen wenigstens 5 Vol.-% (Volumenprozent), bevorzugt wenigstens 7 Vol.-% und insbesondere bevorzugt wenigstens 10 Vol.-% an Methanol enthält. Überraschend wurde nun gefunden, dass verbesserte Eigenschaften erreicht und insbesondere die genannten Anforderungen erfüllt werden durch eine Polyamidformmasse gemäss Anspruch 1, beispielsweise ein entsprechendes PA 6T/66 oder 6T/6I als Komponenten (A), das gleichzeitig Kohlenstofffasern (B) und Glasfasern (C) in einem engen Konzentrationsbereich enthält. Durch die Anwesenheit von Glasfasern kann die Kohlenstofffasern-Konzentration unter 20% gehalten werden. In einer bevorzugten Ausführungsform sorgen eine Kombination von Schlagzähmodifikator und ggf. zudem Ethylen-Vinyl Acetat-Copolymer nicht nur für eine bessere Zähigkeit bei gleichzeitig verbesserter Verarbeitbarkeit (Fliesslänge, vorzugsweise auch Entformbarkeit) und Oberflächenqualität, sondern auch für eine konstantere Beibehaltung der Leitfähigkeit in Kontakt mit Benzin, insbesondere methanolhaltigem Benzin (z.B. CM15, das neben 42.5 Vol.-% Isooctan und 42.5 Vol.-% Toluol 15 Vol.-% Methanol enthält).

Konkret betrifft die vorliegende Erfindung eine Polyamidformmasse nach Anspruch 1.

Wie angegeben stellen sich die vorteilhaften Wirkungen nur ein, wenn die beanspruchten Proportionen eingehalten werden. Werden niedrigere oder höhere Anteile an Kohlenstoffasern eingesetzt, lässt sich v.a. die nachhaltige Leitfähigkeit nicht realisieren, wenn die Glasfaseranteile und die Anteile der Komponenten (D) und (E) nicht eingehalten werden, leiden neben der nachhaltigen Leitfähigkeit v.a. die mechanischen Eigenschaften. Die Anteile an Kohlenstoffasern und Glasfasern sowie der weiteren Zuschläge sind dabei überraschenderweise stark korreliert, was die Eigenschaften, v.a. die nachhaltige Leitfähigkeit und die mechanischen Eigenschaften in einer Gesamtschau, angeht.

Für die verschiedenen Komponenten erweisen sich, gemäss bevorzugter Ausführungsformen, folgende engeren Bereiche als vorteilhaft, wobei sie einzeln in diesen bevorzugten Bereichen gewählt werden können oder in Kombination der Bereiche:
Der Anteil an Komponente (A) kann vorteilhafterweise im Bereich von 40 - 62.9 Gew.-% liegen, vorzugsweise im Bereich von 50 - 58.8 Gew.-%.
Der Anteil an Komponente (B), der Kohlenstoffasern, liegt bevorzugtermassen im Bereich von 14 - 20 Gew.-%, vorzugsweise im Bereich von 15 - 18 Gew.-%.
Der Anteil an Komponente (C), der Glasfasern, liegt vorzugsweise im Bereich von 20 - 28 Gew.-%, weiter vorzugsweise im Bereich von 20 - 25 Gew.-%.
Der Anteil an Komponente (D) liegt vorzugsweise im Bereich von 2 - 8 Gew.-%, weiter vorzugsweise im Bereich von 3 - 6 Gew.-%.
Der Anteil an Komponente (E) liegt bevorzugtermassen im Bereich von 1 - 8 Gew.-%, vorzugsweise im Bereich von 2 - 7 oder 2 - 6 Gew.-%.
Der Anteil an Komponente (F) liegt bevorzugtermassen im Bereich von 0.1 - 2.0 Gew.-%, vorzugsweise im Bereich von 0.2 - 1.5 Gew.-%.

Besonders bevorzugt sind z.B. Formmassen, bei denen die Anteile wie folgt sind:
(A) im Bereich von 40 - 63.9 Gew.-%, (B) im Bereich von 14 - 20 Gew.-%, (C) im Bereich von 20 - 28 Gew.-%., (D) im Bereich von 2 - 8 Gew.-%, (E) im Bereich von 0 - 8 Gew.-%, und (F) im Bereich von 0.1 - 2.0 Gew.-%.
(A) im Bereich von 50 - 58.8 Gew.-%, (B) im Bereich von 15 - 18 Gew.-%, (C) im Bereich von 20 - 25 Gew.-%., (D) im Bereich von 3 - 6 Gew.-%, (E) im Bereich von 2 - 7 Gew.-%, und (F) im Bereich von 0.2 - 1.5 Gew.-%.

Weiter gilt bevorzugt, dass die Summe der Komponenten (B)-(C) im Bereich von 34-45 Gew.-%, vorzugsweise im Bereich von 35-40 Gew.-% liegt.

Gemäss einer weiteren bevorzugten Ausführungsform liegt die Summe der Komponenten (D)-(E) im Bereich von 2 - 10 Gew.-%, vorzugsweise im Bereich von 3-9 oder 4 - 9 Gew.-%.

### Komponente (A):

Als Komponente (A) liegen in der Polyamidformmasse 35 - 68, vorzugsweise 40 - 62.9 Gew.-% wenigstens eines thermoplastischen, teilaromatischen Polyamids vor, wobei dieses nach Anspruch 1 aufgebaut ist. Weitere aliphatische Diamine mit mehr als 8 Kohlenstoffatomen kommen als Bausteine nicht vor.

Allgemein zusammengefasst, ist bevorzugtermassen die Komponente (A) wie folgt ausgebildet:
Eine erste bevorzugte Ausführungsform ist dadurch gekennzeichnet, dass die Komponente (A) ein Polyamid oder eine Mischung von Polyamiden ist, welches eine Schmelztemperatur (Tm), gemessen nach ISO-Norm 11357-3 (2011-05) am Granulat mit einer Aufheizrate von 20 °C/min, im Bereich von 280°C bis 340°C, vorzugsweise im Bereich von 285 °C bis 330 °C aufweist. Bei Vorliegen einer Mischung als Komponente (A) verfügt vorzugsweise nicht nur die Mischung über eine derartige Schmelztemperatur, sondern auch jede der individuellen Komponenten innerhalb von (A).

Eine weitere bevorzugte Ausführungsform ist dadurch gekennzeichnet, dass die Schmelzenthalpie von Komponente (A), im Bereich von 30 bis 70 J/g, insbesondere 40 bis 65 J/g beträgt, wobei vorzugsweise bei Vorliegen einer Mischung als Komponente (A) nicht nur die Mischung über eine derartige Schmelzenthalpie verfügt, sondern auch jede der individuellen Komponenten innerhalb von (A).

Eine weitere bevorzugte Ausführungsform ist dadurch gekennzeichnet, dass die Komponente (A) eine Lösungsviskosität aufweist, gemessen nach ISO 307 (2013-08) in m-Kresol (0,5 Gew.-%, 20°C) von ηᵣₑₗ kleiner 2,6, bevorzugt von ηᵣₑₗ kleiner 2,3, insbesondere von ηᵣₑₗ kleiner 2,0 und von ηᵣₑₗ wenigstens 1,4, bevorzugt von ηᵣₑₗ wenigstens 1,5, insbesondere von ηᵣₑₗ wenigstens 1,55, wobei vorzugsweise bei Vorliegen einer Mischung als Komponente (A) nicht nur die Mischung über eine derartige Lösungsviskosität verfügt, sondern auch jede der individuellen Komponenten innerhalb von (A).

Die Erfindung ist dadurch gekennzeichnet, dass das Polyamid oder die Polyamide der Komponente (A) aufgebaut ist aus:
(A1) 25 - 100 Mol-%, vorzugsweise 40 - 100 Mol-%, insbesondere vorzugsweise 50 - 80 Mol%, Terephthalsäure, bezogen auf den Gesamtgehalt an anwesenden Dicarbonsäuren,
   0 - 75 Mol-%, vorzugsweise 0 - 60 Mol-%, insbesondere vorzugsweise 20 - 50 Mol%, bezogen auf den Gesamtgehalt an anwesenden Dicarbonsäuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 50 - 100 Mol-%, vorzugsweise 80 - 100 Mol%, bezogen auf den Gesamtgehalt an anwesenden Diaminen, wenigstens eines aliphatischen Diamins mit 4 - 8, vorzugsweise mit 6 Kohlenstoffatomen,
   0 - 50 Mol-%, vorzugsweise 0 - 20 Mol%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin mit 8 bis 20 C-Atomen, wobei der prozentuale Molgehalt an Dicarbonsäuren 100 Mol-% und der prozentuale Molgehalt an Diaminen 100 Mol-% ausmacht,
   sowie aus:
(A3) 0 - 100 Mol-% Aminocarbonsäuren und/oder Lactame mit 4 bis 36 Kohlenstoffatomen, vorzugsweise mit 6 bis 12 Kohlenstoffatomen,
   mit der Massgabe, dass die Konzentration von (A3) höchstens 40 Gew.-%, bevorzugt höchstens 30 Gew.-%, insbesondere höchstens 20 Gew.-% bezogen auf die Summe von (A1) bis (A3) ausmacht.

Besonders bevorzugt werden Systeme für das Polyamid oder die Polyamide der Komponente (A), bevorzugtermassen dann, wenn die Komponente (A) im Wesentlichen nur durch ein teilkristallines teilaromatisches Polyamid gebildet wird, welche aufgebaut sind aus:
(A1) 50 - 80 Mol% oder 100 Mol%, Terephthalsäure, bezogen auf den Gesamtgehalt an anwesenden Dicarbonsäuren,
   0 oder 20-50 Mol-%, bezogen auf den Gesamtgehalt an anwesenden Dicarbonsäuren, wenigstens einer Dicarbonsäure ausgewählt aus der Gruppe: von Terephthalsäure verschiedene aromatische Dicarbonsäure mit 8 bis 20 Kohlenstoffatomen, bevorzugt Isophthalsäure, aliphatische Dicarbonsäure mit 6 bis 36 Kohlenstoffatomen, vorzugsweise mit 6 Kohlenstoffatomen, cycloaliphatische Dicarbonsäure mit 8 bis 20 Kohlenstoffatomen oder eine Mischung davon,
(A2) 50 - 100 Mol-%, vorzugsweise 80 - 100 Mol%, bezogen auf den Gesamtgehalt an anwesenden Diaminen, wenigstens eines aliphatischen Diamins mit 4 bis 8, vorzugsweise mit 6 Kohlenstoffatomen,
   0 - 50 Mol-%, vorzugsweise 0 - 20 Mol%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin mit 8 bis 20 C-Atomen, wobei der prozentuale Molgehalt an Dicarbonsäuren 100 Mol-% und der prozentuale Molgehalt an Diaminen 100 Mol-% ausmacht,
   sowie gegebenenfalls aus:
(A3) 0 - 100 Mol-% Aminocarbonsäuren und/oder Lactame mit 4 bis 36 Kohlenstoffatomen, vorzugsweise mit 6 bis 12 Kohlenstoffatomen,
   mit der Massgabe, dass die Konzentration von (A3) höchstens 40 Gew.-%, bevorzugt höchstens 30 Gew.-%, insbesondere höchstens 20 Gew.-% bezogen auf die Summe von (A1) bis (A3) ausmacht.

Bevorzugt in diesem Zusammenhang sind Systeme des Typs 6T/66 (mit Block-Verhältnissen wie folgt: 6T im Bereich von 50-70 Mol% und 66 im Bereich von 30-50 Mol%) und/oder des Typs 6T/6I (mit Block-Verhältnissen wie folgt: 6T im Bereich von 50-80 Mol% vorzugsweise im Bereich von 60-75 Mol%, 6I im Bereich von 20-50, vorzugsweise im Bereich von 25-40 Mol%) und/oder des Typs 6T/MPDT (mit Block-Verhältnissen wie folgt: 6T im Bereich von 40-60 Mol% und MPDT im Bereich von 40-60 Mol%, MPD=2-Methylpentandiamin).

Eine weitere bevorzugte Ausführungsform ist dadurch gekennzeichnet, dass das Polyamid oder die Polyamide der Komponente (A) spezifisch ausgewählt sind aus der folgenden Gruppe: PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/612, PA 6T/12, PA 6T/11, PA 6T/6, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/MPDT (MPD=2-Methylpentandiamin), PA 6T/6I/66, PA 6T/6I/6, PA 6T/6I/12, PA 6T/66/6, PA 6T/66/12, PA 6T/6I/MACMI, PA 6T/66/PACM6, oder eine Mischung derartiger Systeme. Vorzugsweise wird ausgewählt als PA 6T/6I, PA 6T/66 oder eine Mischung derartiger Systeme.

Der Anteil an Terephthalsäure in der Komponente (A) liegt vorzugsweise im Bereich von wenigstens 50 Mol-%, vorzugsweise wenigstens 52 Mol-%, insbesondere vorzugsweise wenigstens 54 Mol-%, und ganz besonders bevorzugt wenigstens 62 Mol-%, vorzugsweise macht Terephthalsäure bis zu 100% aus oder bis zu 99 Mol-%, 95 Mol-%, oder 90 Mol-%. Eine weitere bevorzugte Ausführungsform ist dadurch gekennzeichnet, dass die Komponente (A) gebildet wird durch wenigstens ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten.

Eine weitere bevorzugte Ausführungsform ist dadurch gekennzeichnet, dass die Komponente (A) gebildet wird durch wenigstens ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 52 bis 68 Mol-% Hexamethylenterephthalamid-Einheiten und 32 bis 48 Mol-% Hexamethylenadipamid-Einheiten insbesondere vorzugsweise mit 55 bis 65 Mol-% Hexamethylenterephthalamid-Einheiten und 35 bis 45 Mol-% Hexamethylenadipamid.

Die Komponente (A) kann weiter gebildet werden durch wenigstens ein teilkristallines ternäres Polyamid 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten, insbesondere mit 62 bis 68 Mol-% Hexamethylenterephthalamid-, 20 bis 30 Mol-% Hexamethylenisophthalamid-Einheiten und 5 bis 15 Mol-% Hexamethylenadipamid-Einheiten.

Die Komponente (A) kann zudem weiter gebildet werden durch wenigstens ein 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH2)n-1-CO-, wobei n = 6, 11 oder 12 ist, oder durch ein 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel -NH-(CH2)n-1-CO-, wobei n gleich 6, 11 oder 12 ist, oder durch ein 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel -NH-(CH2)n-1-CO-, wobei n gleich 6, 11 oder 12 ist, oder durch ein 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH2)n-1-CO-, wobei n gleich 6, 11 oder 12 ist.

Nun spezifisch betrachtet lässt sich die Komponente (A) alternativ oder zusätzlich wie folgt weiter allgemein charakterisieren gemäss einer oder mehrerer der folgenden weiteren bevorzugten Ausführungsformen:
Bevorzugtermassen beruht also die Komponente (A) auf einem Polyphthalamid. Polyphthalamide sind Polyamide auf Basis von Terephthalsäure und aliphatischen oder cycloaliphatischen Diaminen und gegebenenfalls weiteren aliphatischen, cycloaliphatischen oder aromatischen Dicarbonsäuren sowie Lactamen und/oder Aminocarbonsäuren.

In Frage kommt als hochschmelzendes Polyamid generell ein Polyamid auf Basis von aromatischen Dicarbonsäuren und kurzkettigen aliphatischen Diaminen. Ein Teil der aromatischen Dicarbonsäuren kann durch aliphatische und/oder cycloaliphatische Dicarbonsäuren, ein Teil der kurzkettigen aliphatischen Diamine kann durch cycloaliphatische und/oder araliphatische Diamine ersetzt werden. Ein teilweiser Ersatz der Dicarbonsäuren und der Diamine kann auch durch Lactame und/oder Aminocarbonsäuren erfolgen.

Somit werden die hochschmelzenden Polyamide der Komponente (A) bevorzugtermassen aus folgenden Komponenten gebildet:
(A1) Dicarbonsäuren:
   50 - 100 Mol-% Terephthalsäure, bezogen auf den Gesamtgehalt an anwesenden Säuren,
   0 - 50 Mol-%, bezogen auf den Gesamtgehalt an anwesenden Säuren, einer anderen aromatischen Dicarbonsäure mit 8 bis 20 Kohlenstoffatomen, und/oder einer aliphatischen Dicarbonsäure mit 6 bis 36 Kohlenstoffatomen, und/oder einer cycloaliphatischen Dicarbonsäure mit 8 bis 20 Kohlenstoffatomen, oder einer Mischung solcher Systeme
(A2) Diamine:
   50 - 100 Mol-% mindestens eines aliphatischen Diamins mit 4 bis 8 Kohlenstoffatomen, bezogen auf den Gesamtgehalt an anwesenden Diaminen,
   0- 50 Mol-% cycloaliphatische Diamine mit 6 bis 20 Kohlenstoffatomen, und/oder araliphatische Diamine mit 8 bis 20 C-Atomen, wie z.B. MXDA und PXDA, oder einer Mischung solcher cycloaliphatischer oder araliphatischer Systeme,
   wobei in den hochschmelzenden Polyamiden der prozentuale Molgehalt an Dicarbonsäuren 100% und der prozentuale Molgehalt an Diaminen 100% ausmacht, und, gegebenenfalls, aus:
(A3) Aminocarbonsäuren und/oder Lactamen, enthaltend 0 - 100 Mol-% Lactame mit 6 bis 12 Kohlenstoffatomen, und/oder Aminocarbonsäuren mit 6 bis 12 Kohlenstoffatomen. Während die Komponenten (A1) und (A2) weitgehend äquimolar eingesetzt werden, beträgt die Konzentration von (A3) auf jeden Fall bevorzugt höchstens 40 Gew.-%, bevorzugt höchstens 30 Gew.-%, insbesondere höchstens 20 Gew.-% bezogen auf die Summe von (A1) bis (A3).

Zusätzlich zu den weitgehend äquimolar eingesetzten Komponenten (A1) und (A2) können Dicarbonsäuren (A1) oder Diamine (A2) zur Regelung der Molmasse oder zum Ausgleich von Monomerverlusten bei der Polyamidherstellung eingesetzt werden, sodass in ihrer Gesamtheit die Konzentration einer Komponente A1 oder A2 überwiegen kann.

Ein Teil der Terephthalsäure (TPS), konkret bis zu 50 Mol-%, bevorzugt bis zu 48 Mol-% und insbesondere bis zu 46 Mol-%, kann durch andere aromatische, aliphatische oder cycloaliphatische Dicarbonsäuren mit 6 bis 36 Kohlenstoffatomen (bezogen auf die Gesamtmenge der Dicarbonsäuren) ersetzt sein.

Zu den geeigneten aromatischen Dicarbonsäuren zählen die Naphthalindicarbonsäure (NDA) und die Isophthalsäure (IPS).

Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Geeignete cycloaliphatische Dicarbonsäuren sind die cis- und/oder trans-Cyclohexan-1,4-dicarbonsäure und/oder cis- und/oder trans-Cyolohexan-1,3-dicarbonsäure (CHDA).

Die als Komponente A2 zu 50 - 100 Mol-% eingesetzten Diamine sind bevorzugtermassen ausgewählt aus der Gruppe 1,4-Butandiamin, 1,5-Pentandiamin, 1,6-Hexandiamin, 2-Methyl-1,5-pentandiamin (MPD), 1,7-Heptandiamin, 1.8-Octandiamin. Hiervon bevorzugt sind die Diamine 1,6-Hexandiamin, 2-Methyl-1,5-pentandiamin und 1,8-Octandiamin, insbesondere 1,6-Hexandiamin und Methyl-1,5-pentandiamin.

Die oben genannten kurzkettigen aliphatischen Diamine können in untergeordneter Menge, das heisst konkret von nicht mehr als 50 Mol-%, von vorzugsweise nicht mehr als 40 Mol-% und insbesondere nicht mehr als 30 Mol-%, jeweils bezogen auf die Gesamtmenge der Diamine) durch andere Diamine ersetzt werden.

Als cycloaliphatische Diamine können vorzugsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP), Bis-(4-Amino-3-ethyl-cyclohexyl)-methan (EACM), Bis-(4-Amino-3,5-dimethy-cyclohexyl)-methan (TMDC) und 3,3'-Dimethyl-4,4'-diaminodicyclohexylmethan (MACM) verwendet werden.

Als araliphatische Diamine können vorzugsweise m-Xylylendiamin (MXDA) und p-Xylylendiamin (PXDA) eingesetzt werden.

Zusätzlich zu den beschriebenen Dicarbonsäuren und Diaminen können noch Lactame und/oder Aminocarbonsäuren als polyamidbildende Komponenten (Komponente A3) in einem gewissen beschränkten Umfang eingesetzt werden. Geeignete Verbindungen sind vorzugsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1) und (A2) eingesetzten Aminocarbonsäuren und/oder Lactame beträgt dabei aber höchstens 40 Gew.-%, bevorzugt höchstens 30 Gew.-% und besonders bevorzugt höchstens 20 Gew.-% bezogen auf die Summe der Komponenten (A1) und (A2).

Speziell bevorzugte Lactame sind Lactame bzw. α,ω-Aminosäuren mit 4, 6, 7, 8, 11 oder 12 C-Atomen. Dies sind beispielsweise die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Weil Diamine flüchtigere Verbindungen als Dicarbonsäuren sind, entsteht beim Herstellprozess typischerweise ein Diaminverlust. Zum Ausgleich des Diaminverlustes wird deshalb bevorzugt dem Monomeransatz ein Diaminüberschuss von 1 bis 8 Gew.-% bezogen auf die Gesamtmenge der Diamine zugesetzt. Mit dem Diaminüberschuss wird auch das Molekulargewicht und die Verteilung der Endgruppen geregelt.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die bevorzugte Einsatzmenge der Regler liegt zwischen 10 und 200 mmol pro kg Polymer.

Die teilaromatischen Copolyamide (A) können mit an sich bekannten Verfahren hergestellt werden. Geeignete Verfahren sind an verschiedener Stelle beschrieben worden, und in der Folge sollen einige der möglichen Verfahren angegeben werden, der Offenbarungsgehalt der nachfolgend genannten Patent-Dokumente wird hinsichtlich des Verfahrens zur Herstellung des Copolyamids der Komponente A der vorliegenden Erfindung ausdrücklich in den Offenbarungsgehalt der vorliegenden Anmeldung eingeschlossen: DE 195 13 940, EP 0 976 774, EP 0 129 195, EP 0 129 196, EP 0 299 444, US 4,831,106, US 4,607,073, DE 14 95 393 und US 3,454,536.

Zur Herstellung der Komponente (A) geeignet ist vorzugsweise die zweistufige Herstellung zuerst eines tiefviskosen, niedermolekularen Vorkondensats und mit anschliessender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es zum Beispiel in DE 696 30 260 angegeben ist, deren Offenbarungsgehalt diesbezüglich ebenfalls mit eingeschlossen sein soll.

Für Produkte mit Schmelzpunkten unter 300°C eignet sich auch das in der US 3,843,611 und US 3,839,296 beschriebene und diesbezüglich ebenfalls mit eingeschlossene, einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

Allgemein formuliert ist also eine bevorzugte Ausführungsform der Polyamidformmasse hinsichtlich der Komponente (A1) dadurch gekennzeichnet, dass die von Terephthalsäure verschiedene Dicarbonsäure der Komponente (A1) ausgewählt ist aus der Gruppe: Naphthalindicarbonsäure, Isophthalsäure, Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimerfettsäure (C36), cis- und/oder trans-Cyclohexan-1,4-dicarbonsäure, cis- und/oder trans-Cyolohexan-1,3-dicarbonsäure respektive Mischungen davon.

Eine bevorzugte Ausführungsform der Polyamidformmasse hinsichtlich der Komponente (A2) ist dadurch gekennzeichnet, dass das aliphatische Diamin der Komponente (A2) ausgewählt ist aus der Gruppe: 1,4-Butandiamin, 1,5-Pentandiamin, 1,6-Hexandiamin, 2-Methyl-1,5-pentandiamin, 1,7-Heptandiamin, 1,8-Octandiamin, oder eine Mischung davon, wobei folgende Gruppe bevorzugt ist: 1,6-Hexandiamin, 2-Methyl-1,5-pentandiamin oder eine Mischung davon.

Eine weitere bevorzugte Ausführungsform der Polyamidformmasse hinsichtlich der Komponente (A2) ist dadurch gekennzeichnet, dass das cycloaliphatische respektive araliphatische Diamin der Komponente (A2) ausgewählt ist aus der Gruppe: Cyclohexandiamin, 1,3-Bis-(Aminomethyl)-cyclohexan, Isophorondiamin, Norbornandimethylamin, 4,4'-Diaminodicyclohexylmethan, 2,2-(4,4'-Diaminodicyclohexyl)propan und 3,3'-Dimethyl-4,4'-diaminodicyclohexylmethan, m-Xylylendiamin und p-Xylylendiamin, oder eine Mischung davon.

Eine weitere bevorzugte Ausführungsform der Polyamidformmasse hinsichtlich der Komponente (A3) ist dadurch gekennzeichnet, dass die Komponente (A3) ausgewählt ist aus der Gruppe: Caprolactam, α,ω-Aminocapronsäure, α,ω-Aminononansäure, α,ω-Aminoundecansäure, Laurinlactam α,ω-Aminododecansäure, α,ω-Aminosäuren mit 4, 6, 7, 8, 11 oder 12 C-Atomen, insbesondere Pyrrolidin-2-on, ε-Caprolactam, Önanthlactam, Capryllactam, Laurinlactam, 1,4-Aminobutansäure, 1,6-Aminohexansäure, 1,7-Aminoheptansäure, 1,8-Aminooctansäure, 1,11-Aminoundecansäure und 1,12-Aminododecansäure oder eine Mischung davon.

Konkrete Vertreter für die erfindungsgemässen teilaromatischen Polyamide sind die folgenden bereits oben angegebenen Systeme oder Mischungen (Blends) davon: PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/MPDT (MPD=2-Methylpentandiamin), PA 6T/6I/66, PA 6T/6I/6, PA 6T/6I/12, PA 6T/66/6, PA 6T/66/12, PA 6T/6I/MACMI, PA 6T/66/PACM6.

Gemäss einer bevorzugten Ausführungsform macht der Anteil an Terephthalsäure in der Komponente (A1) wenigstens 50 Mol-% aus, vorzugsweise wenigstens 52 Mol-%, insbesondere vorzugsweise wenigstens 54 Mol-%, und ganz besonders bevorzugt wenigstens 62 Mol-%, wobei bevorzugtermassen die Komponente (A2) ausschliesslich aus Hexamethylendiamin besteht oder ausschliesslich aus 2-Methyl-1,5-Pentandiamin oder ausschliesslich aus einer Mischung aus Hexamethylendiamin und 2-Methyl-1,5-Pentandiamin.

Erfindungsgemäss sind also als hochschmelzende Polyamide (A), insbesondere folgende teilaromatische Copolyamide bevorzugt:
- teilkristallines Polyamid, hergestellt aus mindestens 50 Mol-% Terephthalsäure und Hexamethylendiamin, als einzige Diaminkomponente;
- teilkristallines Polyamid, hergestellt aus mindestens 52 Mol-% Terephthalsäure und Hexamethylendiamin;
- teilkristallines Polyamid, hergestellt aus mindestens 54 Mol-% Terephthalsäure und Hexamethylendiamin;
- teilkristallines Polyamid, hergestellt aus mindestens 62 Mol-% Terephthalsäure und Hexamethylendiamin;
- teilkristallines Polyamid, hergestellt aus mindestens 60-70 Mol-% Terephthalsäure, 20-30 Mol-% Isophthalsäure, 5-15 Mol-% Adipinsäure und Hexamethylendiamin;
- teilkristallines Polyamid, hergestellt aus mindestens 50 Mol-% Terephthalsäure und 2-Methyl-1,5-pentandiamin;
- teilkristallines Polyamid, hergestellt aus mindestens 50 Mol-% Terephthalsäure und einer Mischung aus Hexamethylendiamin und 2-Methyl-1,5-pentandiamin.

Gemäss einer weiteren bevorzugten Ausführungsform macht der Anteil an Terephthalsäure in der Komponente (A1) wenigstens 50 Mol-% aus, wobei innerhalb der Komponente (A2) das aliphatische Diamin Hexamethylendiamin in einem Anteil von wenigstens 10 Mol-%, bevorzugt wenigstens 15 Mol-% und besonders bevorzugt wenigstens 50 Mol-%, umfasst, und dass der verbleibende Anteil an Diamin ausgewählt ist aus der Gruppe: m-Xylylendiamin, Bis-(4-aminocyclohexyl)-methan, Bis-(4-amino-3-methyl-cyclohexyl)-methan, oder eine Mischung davon, wobei vorzugsweise aus dieser Gruppe nur ein System in einer Mischung mit Hexamethylendiamin eingesetzt wird.

Erfindungsgemäss sind also als hochschmelzende Polyamide (A), weiter insbesondere folgende teilaromatische Copolyamide bevorzugt:
- teilkristallines Polyamid, hergestellt aus mindestens 50 Mol-% Terephthalsäure und einer Mischung aus Hexamethylendiamin und m-Xylylendiamin, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird;
- teilkristallines, Polyamid hergestellt aus mindestens 50 Mol-% Terephthalsäure und einer Mischung aus Hexamethylendiamin und Bis-(4-aminocyclohexyl)-methan, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Bis-(4-amino-3-methyl-cyclohexyl)-methan, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird.

Eine weitere bevorzugte Ausführungsform der Polyamidformmasse ist dadurch gekennzeichnet, dass die Komponente (A) gebildet wird durch ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten.

Erfindungsgemäss sind also als hochschmelzende Polyamide (A), weiter insbesondere folgende teilaromatische Copolyamide bevorzugt:
- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten.

Eine weitere bevorzugte Ausführungsform der Polyamidformmasse ist dadurch gekennzeichnet, dass die Komponente (A) gebildet wird durch ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 50 bis 65 Mol-% Hexamethylenterephthalamid-Einheiten und 35 bis 50 Mol-% Hexamethylenadipamid-Einheiten insbesondere vorzugsweise mit 52 bis 62 Mol-% Hexamethylenterephthalamid-Einheiten und 38 bis 48 Mol-% Hexamethylenadipamid.

Erfindungsgemäss sind also als hochschmelzende Polyamide (A), zudem insbesondere folgende teilaromatische Copolyamide bevorzugt:
- teilkristallines Polyamid 6T/66 mit 50 bis 80 Mol-% Hexamethylenterephthalamid-Einheiten und 20 bis 50 Mol-% Hexamethylenadipamid (66)-Einheiten;
- teilkristallines Polyamid 6T/66 mit 50 bis 65 Mol-% Hexamethylenterephthalamid-Einheiten und 35 bis 50 Mol-% Hexamethylenadipamid (66)-Einheiten;
- teilkristallines Polyamid 6T/66 mit 52 bis 62 Mol-% Hexamethylenterephthalamid-Einheiten und 38 bis 48 Mol-% Hexamethylenadipamid (66)-Einheiten;
- teilkristallines Polyamid 6T/66 mit 55 Mol-% Hexamethylenterephthalamid-Einheiten und 45 Mol-% Hexamethylenadipamid (66)-Einheiten.

Erfindungsgemäss sind also als hochschmelzende Polyamide (A), weiterhin insbesondere folgende teilaromatische Copolyamide bevorzugt:
- teilkristallines Polyamid 6T/MPDT mit 35 bis 65 Mol-% Hexamethylenterephthalamid-Einheiten und 65 bis 35 Mol-% 2-Methyl-1,5-pentamethylenterephthalamid (MPDT)-Einheiten;
- teilkristallines Polyamid 6T/MPDT mit 40 bis 60 Mol-% Hexamethylenterephthalamid-Einheiten und 60 bis 40 Mol-% 2-Methyl-1,5-pentamethylenterephthalamid (MPDT)-Einheiten;
- teilkristallines Polyamid 6T/MPDT mit 45 bis 55 Mol-% Hexamethylenterephthalamid-Einheiten und 55 bis 45 Mol-% 2-Methyl-1,5-pentamethylenterephthalamid (MPDT)-Einheiten.

Die Komponente (A) kann, gemäss einer weiteren bevorzugten Ausführungsform, auch durch ein teilkristallines ternäres Polyamid gebildet sein.

Entsprechend ist weiter bevorzugt, dass die Komponente (A) gebildet wird durch ein teilkristallines ternäres Polyamid 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten.

Ebenfalls bevorzugt ist, dass die Komponente (A) gebildet wird durch ein 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH2)n-1-CO-, wobei n = 6, 11 oder 12 ist.

Ebenfalls bevorzugt ist, dass die Komponente (A) gebildet wird durch ein 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel - NH-(CH2)n-1-CO-, wobei n gleich 6, 11 oder 12 ist.

Ebenfalls bevorzugt ist, dass die Komponente (A) gebildet wird durch ein 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel - NH-(CH2)n-1-CO-, wobei n gleich 6, 11 oder 12 ist.

Ebenfalls bevorzugt ist, dass die Komponente (A) gebildet wird durch ein 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH2)n-1-CO-, wobei n gleich 6, 11 oder 12 ist.

Gemäss einer weiteren bevorzugten Ausführungsform basiert die Komponente A auf einem teilaromatischen und teilkristallinen Polyamid, das bis zu 26 Mol-% aliphatische Einheiten enthält, die durch Kondensation von dimerisierten Fettsäuren mit bis zu 44 Kohlenstoffatomen und einem aliphatischen oder cycloaliphatischen Diamin, insbesondere mit Hexamethylendiamin herstellbar sind.

### Komponente (B):

Die Kohlenstofffaser (auch: Carbonfaser oder Kohlefaser) der Komponente (B) liegt in der Polyamidformmasse in einem Anteil von 13-22 Gew.-%, vorzugsweise von 14 bis 20 Gew.-% oder von 15 bis 20 Gew.-% und insbesondere bevorzugt von 15 bis 18 Gew.-% vor.

Allgemein zusammengefasst ist bevorzugtermassen die Komponente (B) wie folgt ausgebildet:
Eine erste bevorzugte Ausführungsform ist dadurch gekennzeichnet, dass die Komponente (B) als geschnittene Fasern oder als geschnittenes oder endloses Faserbündel ausgebildet sind.

Eine weitere bevorzugte Ausführungsform ist dadurch gekennzeichnet, dass die Fasern der Komponente (B) eine Länge von 0.1 bis 50 mm, bevorzugt von 1 bis 12 mm aufweisen und/oder einen Durchmesser von 5 bis 40 µm, insbesondere bevorzugt von 5 bis 10 µm.

Eine weitere bevorzugte Ausführungsform ist dadurch gekennzeichnet, dass die Fasern der Komponente (B) auf Basis von PAN-, Pech- oder Cellulose-basierten Fasern ausgebildet sind.

Weiter können die Fasern der Komponente (B) anisotrop ausgebildet sein.

Die Fasern der Komponente (B) können als Kohlenstofffaserbündel ausgebildet sein aus mehreren hundert bis hunderttausend Einzelfilamenten, die einem Durchmesser von 5 bis 10 µm, eine Zugfestigkeit von 1000 bis 7000 MPa und einen Elastizitätsmodul von 200 bis 700 GPa aufweisen.

Nun spezifisch betrachtet, lässt sich die Komponente (B) alternativ, oder zusätzlich wie folgt, weiter allgemein charakterisieren gemäss einer oder mehrerer der folgenden weiteren bevorzugten Ausführungsformen:
Die Kohlenstofffasern der Komponente (B) können als geschnittene Fasern oder als endloses Faserbündel eingesetzt werden, wobei geschnittene Kohlenstofffasern mit einer Länge von 0.1 bis 50 mm, bevorzugt von 1 bis 12 mm und einem Durchmesser von 5 bis 40 µm, insbesondere bevorzugt von 5 bis 10 µm bevorzugt verwendet werden. Als Basis für die Kohlenstofffasern können PAN-, Pech- oder Cellulose-basierte Fasern, wie z.B. Celluloseacetat verwendet, insbesondere bevorzugt sind PAN-Fasern (PAN = Polyacrylnitril). Diese Ausgangsmaterialien werden durch Pyrolyse (Oxidation und Carbonisation) in graphitartig angeordneten Kohlenstoff umgewandelt. Anisotrope Kohlenstoffffasern zeigen hohe Festigkeiten und Steifigkeiten bei gleichzeitig geringer Bruchdehnung in axialer Richtung.

Üblicherweise werden Kohlenstofffasern hergestellt, indem eine geeignete Polymerfaser aus Polyacrylnitril, Pech oder Rayon wechselnden kontrollierten Bedingungen von Temperatur und Atmosphäre ausgesetzt wird. Beispielsweise können Kohlenstoff-Fasern durch Stabilisierung von PAN-Fäden oder -Geweben in oxidativer Atmosphäre bei 200 bis 300°C und anschließender Carbonisierung in inerter Atmosphäre oberhalb 600°C hergestellt werden. Derartige Verfahren sind Stand der Technik und beispielsweise beschrieben in H. Heißler, "Verstärkte Kunststoffe in der Luft- und Raumfahrt", Verlag W. Kohlhammer, Stuttgart, 1986.

Kohlenstofffaserbündel bestehen aus mehreren hundert bis hunderttausend Kohlenstofffasern, den sogenannten Einzelfilamenten, die einem Durchmesser von 5 bis 10 µm, eine Zugfestigkeit von 1000 bis 7000 MPa und einen Elastizitätsmodul von 200 bis 700 GPa aufweisen. Üblicherweise werden 1.000 bis 24.000 Einzelfilamente zu einem Multifilamentgarn (endloses Kohlenstofffaserbündel, Roving) zusammengefasst, das aufgespult wird. Die Weiterverarbeitung zu textilen Halbzeugen wie z. B. Geweben, Geflechten oder Multiaxialgelegen erfolgt auf Webmaschinen, Flechtmaschinen oder Multiaxial-Wirkmaschinen bzw. im Bereich der Herstellung von faserverstärkten Kunststoffen direkt auf Prepreganlagen, Strangziehanlagen (Pultrusionsanlagen) oder Wickelmaschinen.

Als Kurzschnittfasern können sie Polymeren beigemischt und über Extruder- und Spritzgussanlagen zu Kunststoffbauteilen verarbeitet werden.

Um die Verarbeitung von Kohlenstofffasern zu verbessern oder erst zu ermöglichen, sowie eine gute Verträglichkeit zu den eingesetzten Kunststoffen zu bewirken, werden die Kohlenstofffasern an ihrer Oberfläche mit einer Schlichte versehen. Bevorzugt wird eine Schlichte mit Kompatibilität zu Polyamid. Kommerziell ist eine solche geschnittene Kohlenstofffaser beispielsweise unter dem Handelsnamen Tenax E-HT C604 6MM von Toho Tenax Europe GmbH (DE) erhältlich.

Bei der Kohlenstofffaser der Komponente (B) kann es sich gemäss einer weiteren bevorzugten Ausführungsform um eine Rezyklat-Kohlefaser handeln.

### Komponente (C):

Bevorzugtermassen liegt die Komponente (C) in einem Anteil von 20-28 Gew.-% vor, insbesondere vorzugsweise im Bereich von 20-25 Gew.-%.

Allgemein zusammengefasst ist bevorzugtermassen die Komponente (C) wie folgt ausgebildet:
Die Fasern der Komponente (C) weisen bevorzugtermassen eine kreisförmige oder nicht-kreisförmige Querschnittfläche auf.

Im Fall von Glasfasern mit nicht-kreisförmiger Querschnittfläche werden solche mit einem Abmessungsverhältnis von der Hauptquerschnittsachse zur senkrecht darauf stehenden Nebenquerschnittsachse von mehr als 2, bevorzugt von 2 bis 8, insbesondere von 2.5 bis 5 bevorzugt eingesetzt.

Weiter liegt im Fall von Glasfasern mit nicht-kreisförmiger Querschnittfläche die Länge der Hauptquerschnittsachse bevorzugt im Bereich von 6 bis 40 µm, insbesondere im Bereich von 15 bis 30 µm und die Länge der Nebenquerschnittsachse bevorzugt im Bereich von 3 bis 20 µm, insbesondere im Bereich von 4 bis 10 µm.

Diese sogenannten flachen Glasfasern mit nicht-kreisförmiger Querschnittfläche weisen z.B. eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern kann darin bestehen, dass die flachen Glasfasern eine möglichst hohe Packungsdichte aufweisen, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Gemäss einer weiteren bevorzugten Ausführungsform sind die Fasern der Komponente (C) Glasfasern, die im Wesentlichen aus den Komponenten Siliciumdioxid, Calciumoxid, Magnesiumoxid und Aluminiumoxid aufgebaut ist oder bestehen. Dabei ist bevorzugt das Gewichtsverhältnis SiO2/(CaO+MgO) kleiner 2.7, bevorzugt kleiner 2.5 und insbesondere zwischen 2.1 und 2.4.

Insbesondere handelt es sich bei Komponente (C) um eine E-Glasfaser gemäss ASTM D578-00.

Erfindungsgemäss kann es sich bei der Glasfaser auch um eine hochfeste Glasfaser handeln. Gemäss einer anderen bevorzugten Ausführungsform sind die Fasern der Komponente (C) Glasfasern, die auf dem ternären System Siliciumdioxid-Aluminiumoxid-Magnesiumoxid oder auf dem quaternären System Siliciumdioxid-Aluminiumoxid-Magnesiumoxid-Calciumoxid beruhen. Dabei ist eine Zusammensetzung von 58-70 Gew.-% Siliciumdioxid (SiO2), 15-30 Gew.-% Aluminiumoxid (Al2O3), 5-15 Gew.-% Magnesiumoxid (MgO), 0-10 Gew.-% Calciumoxid (CaO) und 0-2 Gew.-% weitere Oxide, insbesondere Zirkoniumdioxid (ZrO2), Boroxid (B2O3), Titandioxid (TiO2) oder Lithiumoxid (Li2O), bevorzugt.

Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Fasern der Komponente (C) können auch Glasfasern mit kreisförmigem Querschnitt mit einem Durchmesser im Bereich von 5-20 µm sein, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Die Glasfasern der Komponente (C) können generell in Form von Kurzfasern, bevorzugt in Form von Schnittglas mit einer Länge im Bereich von 0.2-20 mm, oder in Form von Endlosfasern vorliegen. Somit enthalten die Formmassen 18 bis 30 Gew.-%, bevorzugt 20 bis 30 Gew.-% und besonders bevorzugt 20 bis 25 Gew.-% einer Glasfaser (C), die in Form von sogenannten Kurzfasern (z.B. Schnittglas mit einer Länge von 0.2-20 mm) oder Endlosfasern (Rovings) eingesetzt werden.

Die genannten Glasfasern können einzeln oder in einem Gemisch der verschiedenen Ausbildungen nach den bevorzugten Ausführungsformen eingesetzt werden.

Zur Verstärkung der erfindungsgemässen Formmassen können also z.B. auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponente (C) als Roving eingesetzten hochfesten Glasfasern weisen bevorzugt einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5.

Endlosfasern, insbesondere bevorzugt innerhalb der Komponente (C), analoges gilt aber bevorzugt auch oder alternativ für Komponente (B), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

### Komponente (D):

In einer weiteren Ausführungsform enthält die erfindungsgemässe Formmasse als Komponente (D) 1 bis zu 10 Gew.-%, bevorzugt 2 bis 8 Gew.-%, insbesondere bevorzugt 3 bis 6 Gew.-% bezogen auf die gesamte Formmasse einen oder mehrerer von (A), (E) und (F) verschiedener Schlagzähmodifikatoren (SZM) und/oder Polymere verschieden von (A), (E) und (F).

Allgemein zusammengefasst ist bevorzugtermassen die Komponente (D) wie folgt ausgebildet:
Komponente (D), soweit als Schlagzähmodifikator verschieden von (A), (E) und (F) ausgewählt, ist bevorzugtermassen ausgewählt aus der folgenden Gruppe: Naturkautschuk, Pfropfkautschuk, Homopolymere oder Copolymere von Olefinen und/oder Styrolen und deren Derivate und/oder Acrylaten und deren Derivate und/oder Anhydriden.

Generell können die Systeme, die Komponente (D) bilden, ungepfropft oder gepfropft sein. Die Komponente (D) kann dabei insbesondere durch (Block)Copolymere auf Basis von wenigstens einem oder einer Kombination folgender Bausteine gebildet sein oder solche Systeme enthalten: Polybutadien, Polyisopren, Polyisobutylen, Mischpolymerisat des Butadiens und/oder Isoprens mit Styrol oder Styrolderivaten und anderen Comonomeren, hydrierte Mischpolymerisate und oder Mischpolymerisate, die durch Pfropfen oder Copolymerisation mit Säureanhydriden, (Meth)acrylsäure und deren Ester entstanden sind, auf Styrol beruhende Blockcopolymere, Ethylen-α-Olefin-Copolymere, Ethylen-Acrylat- oder Ethylen-Butylen-Acrylat-Copolymere, Ethylen, Propylen, Buten-1, einschliesslich Copolymere von Olefinen und copolymerisierbaren Monomeren, wie insbesondere (Meth)acrylsäureester und Methylhexadien. Diese Systeme können auch als Ionomer vorliegen, in welchem die polymergebundenen Carboxylgruppen ganz oder teilweise durch Metallionen miteinander verbunden sind.

Komponente (D), soweit als Schlagzähmodifikator verschieden von (A), (E) und (F) ausgewählt, ist bevorzugtermassen ausgewählt wie folgt: durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Komponente (D), soweit als Polymer verschieden von (A), (E) und (F) ausgewählt, ist bevorzugtermassen ausgewählt aus der folgenden Gruppe: aliphatisches Polyamid und Polyolefin. Aliphatische Polyamide sind vorzugsweise ausgewählt aus der Gruppe PA 6, PA 46, PA 56, PA 66, PA 66/6, PA 69, PA 610, PA 612, PA 614. Besonders bevorzugt wird PA 66 und PA 6. Diese aliphatischen Polyamide haben bevorzugt eine Lösungsviskosität gemessen in m-Kresol (0.5 Gew.-%, 20°C, gemäss ISO 307) von im Bereich 1.5 bis 3.0, insbesondere 1.6 bis 2.7. Bei den Polyolefinen sind Polyethylen, insbesondere LDPE, und Polypropylen sowie Ethylen-Propylen-Copolymere bevorzugt. Einige Additive, zusammengefasst in Komponente (F), werden bei der Herstellung der erfindungsgemässen Formmassen nicht in reiner Form mit den anderen Komponenten gemischt, sondern in Form sogenannter Konzentrate oder Masterbatche (MB). Basis für diese MB sind bevorzugt die oben genannten aliphatischen Polyamide oder Polyolefine der Komponente (D), insbesondere PA 6, PA 66 und LDPE. Die Anteile der MB, die auf den aliphatischen Polyamiden oder Polyolefinen beruhen, werden daher der Komponente (D) zugeordnet. Somit wird nur der reine Anteil des Additives selbst der Komponente (F) zugerechnet.

Nun spezifisch betrachtet lässt sich die Komponente (D) alternativ oder zusätzlich wie folgt weiter allgemein charakterisieren gemäss einer oder mehrerer der folgenden weiteren bevorzugten Ausführungsformen:
Der Schlagzähmodifier kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein.

Der Schlagzähmodifier (D) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- Kautschuk oder ein unpolares oder polares Olefin-Homopolymeres und -Copolymeres, das durch Pfropfen oder Copolymerisation mit Säureanhydriden, (Meth)acrylsäure und deren Ester entstanden ist, sein.

Der Schlagzähmodifier (D) kann auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind.

Als Beispiele der auf Styrol beruhenden Blockcopolymere seien Styrol-(ethylen-butylen)-Zweiblock und Styrol-(ethylen-butylen)-styrol-Dreiblock-Copolymere genannt.

Gemäss einer weiteren bevorzugten Ausführungsform sind die erfindungsgemässen Formmassen dadurch gekennzeichnet, dass die Komponente (D) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält.

So kann es sich bei der Komponenten (D) beispielsweise um ein Elastomer handeln, welches basiert auf einem Ethylen-C3-12- α -Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (D) um Ethylen-Propylen-Kautschuk und/oder LLDPE und/oder VLDPE handelt.

Alternativ oder zusätzlich (beispielsweise in Mischung) kann (D) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1) heptadien, Hexadien-1.4, Dicyclopentadien und/oder insbesondere 5-Ethylidennorbornen.

In Frage als Bestandteil für die Komponente (D) kommen zudem auch Ethylen-Acrylat- oder Ethylen-Butylen-Acrylat-Copolymere.

Bevorzugtermassen verfügt die Komponente (D) über Bestandteile mit Carbonsäure- oder Carbonsäureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil von (D) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (D) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Die als Komponente (D) eingesetzten Schlagzähmodifikatoren schliessen damit Homopolymere oder Copolymere von Olefinen, wie z.B. Ethylen, Propylen, Buten-1, oder Copolymere von Olefinen und copolymerisierbaren Monomeren, wie (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere. Beispiele für kommerziell erhältliche Schlagzähmodifier, welche im Rahmen der Bestandteile der Komponente (D) eingesetzt werden können, sind: TAFMER MC201: g-MAH (-0.6 %) Blend aus 67% EP Copolymer (20 Mol-% Propylen) + 33 % EB Copolymer (15 mol-% Buten-1)); TAFMER MH5010: g-MAH (0.6 %) Ethylen-Butylen-Copolymer; TAFMER MH7010: g-MAH (0.7 %) Ethylen-Butylen-Copolymer; Mitsui. TAFMER MH7020: g-MAH (0.7 %) EP-Copolymer von Mitsui Chemicals; EXXELOR VA1801: g-MAH (0.7 %) EP-Copolymer; EXXELOR VA1803: g-MAH (0.5-0.9 %) EP Copolymer, amorph; EXXELOR VA1810: g-MAH (0.5 %) EP-Copolymer; EXXELOR MDEX 94-1 1: g-MAH (0.7 %) EPDM, Exxon Mobile Chemical; FUSABOND MN493D: g-MAH (0.5 %) Ethylen-Octen-Copolymer; FUSABOND A EB560D (g-MAH) Ethylen-n-butyl-acrylat-copolymer; ELVALOY, DuPont; Kraton FG1901GT: g-MAH (1.7%) SEBS mit einem S zu EB-Verhältnis von 30:70.

Bevorzugt wird als Komponente (D) auch ein Ionomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind, oder Polymere, die Epoxygruppen in der Seitenkette tragen. Im Hinblick auf die Polymere mit Epoxygruppen in der Seitenkette werden bevorzugt Copolymere, aufgebaut aus Epoxygruppen-enthaltenden Monomeren und mindestens einem weiteren Monomeren, wobei beide Gruppen von Monomeren mindestens eine polymerisierbare Kohlenstoff-Kohlenstoff-Doppelbindung enthalten.

Bevorzugte Epoxygruppen-enthaltende Monomere sind Glycidylacrylat und Glycidylmethacrylat. Die weiteren Monomere mit C-C-Doppelbindung sind bevorzugt ausgewählt aus Alkenen (acyclische Alkene, Cycloalkene, Polyene), Acryl- und Vinylmonomeren, wobei acyclische Alkene mit 2 bis 10 Kohlenstoffatomen, und Acrylsäureester besonders bevorzugt werden.

Somit werden als Komponente (D) bevorzugt Copolymere aus Glycidylacrylat und/oder Glycidylmethacrylat und mindestens einem weiteren ungesättigten Monomeren, das wenigstens eine nicht-aromatische Kohlenstoff-Kohlenstoff-Doppelbindung enthält, d.h. es handelt sich um ein olefinisch ungesättigtes Monomer, verwendet. Bevorzugtermassen ist Komponente (D) ein Copolymer aus Glycidylacrylat und/oder Glycidylmethacrylat und mindestens einem weiteren olefinisch ungesättigten Monomeren, wobei die Konzentration von Glycidylacrylat und Glycidylmethacrylat im Bereich von 5 bis 15 Gew.-%, bezogen auf das Copolymer liegt.

Weiterhin wird bevorzugt, wenn das weitere olefinisch ungesättigte Monomer ein einfach ungesättigtes Olefin, bevorzugt ein α-Olefin, mit 2 bis 8 Kohlenstoffatomen oder ein (Meth)acrylsäureester oder ein Vinylmonomer ist. Insbesondere enthält das Copolymer (D) neben Glycidylacrylat und/oder Glycidylmethacrylat mindestens ein weiteres olefinisch ungesättigte Monomer ausgewählt aus der Gruppe bestehend aus Ethen, Propen, 1-Buten, 2-Buten, 1-Penten, 2-Penten, Methy(meth)lacrylat, Ethyl(meth)acrylat, Propyl(meth)acrylat, Isopropyl(meth)acrylat, Butyl(meth)acrylat, Acrylamid und Acrylnitril. Besonders bevorzugt ist die Komponente (D) ein Copolymer aus Glycidylmethacrylat und Ethen sowie gegebenenfalls weiteren olefinisch ungesättigten Monomeren, wobei der Gehalt an Ethen im Bereich von 50 bis 95 Gew.-%, bevorzugt im Bereich von 65 bis 93 Gew.-% und besonders bevorzugt im Bereich von 80 - 95 oder 85 bis 94 liegt.

Konkrete Beispiele sind Copolymere aus Ethylen und Glycidylacrylat; Ethylen und Glycidylmethacrylat; Ethylen, Methylmethacrylat und Glycidylmethacrylat; Ethylen, Methylacrylat und Glycidylmethacrylat; Ethylen, Ethylacrylat und Glycidylmethacrylat; Ethylen, Butylacrylat und Glycidylmethacrylat; Ethylen und Glycidylmethacrylat. Besonders bevorzugt werden Copolymere
- aus Ethylen und Glycidylmethacrylat mit einem Gehalt an Glycidylmethacrylat von 7 bis 14 Gew.-% bezogen auf die Summe aller Monomere im Copolymer;
- aus 56 - 73 Gew.-% Ethylen, 20 - 30 Gew.-% Methylacrylat und 7 - 14 Gew.-% Glycidylmethacrylat bezogen auf die Summe aller Monomere im Copolymer;
- aus 51 - 78 Gew.-% Ethylen, 15 - 35 Gew.-% Butylacrylat und 7 - 14 Gew.-% Glycidylmethacrylat bezogen auf die Summe aller Monomere im Copolymer.

Besonders bevorzugte Beispiele für erfindungsgemäß einsetzbare Komponenten (B) sind die von Arkema unter dem Produktnamen Lotader AX erhältlichen Systeme, insbesondere vom Typ AX8840 (Copolymer aus 92% Ethen und 8% Glycidylmethacrylat) oder vom Typ AX8900 (Copolymer aus 67% Ethen, 25% Methylacrylat und 8% Glycidylmethacrylat). Ebenfalls bevorzugt sind Produkte vom Typ Elvaloy von Dupont, insbesondere Elvaloy PTW (Copolymer aus 67% Ethen, 28% Butylacrylat und 5% Glycidylmethacrylat), sowie Produkte vom Typ Igetabond erhältlich von Sumitomo, insbesondere Igetabond E (Copolymer aus 88% Ethen und 12% Glycidylmethacrylat).

### Komponente (E):

Als Komponente (E) liegen in der Formmasse 0-10 Gew.-% Ethylen-Vinylacetat-Copolymer (EVA) vor. Eine bevorzugte Ausführungsform ist dadurch gekennzeichnet, dass der Anteil an Komponente (E) im Bereich von 1.0 -8.0 Gew.-% liegt, vorzugsweise im Bereich von 2.0-7.0 Gew.-%.

Allgemein zusammengefasst ist bevorzugtermassen die Komponente (D) wie folgt ausgebildet:
Komponente (E) ist vorzugsweise ein Ethylen-Vinylacetat-Copolymer mit einem Gehalt an Vinylacetat von 5-35 %, vorzugsweise 8-25 %, insbesondere vorzugsweise 10-20 %, wobei die Prozente jeweils auf die Gesamtmasse an Ethylen-Vinylacetat-Copolymer, inklusive gegebenenfalls vorhandener Pfropfung, bezogen sind.

Gemässe einer weiteren bevorzugten Ausführungsform verfügt Komponente (E) vorzugsweise über eine Molmasse im Bereich von 20'000 bis 500'000 g/mol, insbesondere bevorzugt im Bereich von 30'000 bis 300'000 g/mol.

Komponente (E) kann ungepfropft oder gepfropft sein respektive über Säure- oder Säureanhydridgruppen verfügt, die durch thermische oder radikalische Reaktion des Hauptkettenpolymers mit einem ungesättigten Dicarbonsäureanhydrid, einer ungesättigten Dicarbonsäure und/oder einem ungesättigten Dicarbonsäuremonoalkylester eingebracht wurden, vorzugsweise unter Einsatz wenigstens eines der folgenden Systeme: Acrylsäure, Methacrylsäure, Maleinsäure, Maleinsäureanhydrid, Maleinsäuremonobutylester, Fumarsäure, Aconitsäure, Glycidylacrylat, Glycidylmethacrylat, oder Itaconsäureanhydrid, dies bevorzugt in einer Konzentration im Bereich von 0.1 bis 6.0 Gew.-%. Das Ethylen-Vinylacetat-Copolymer verfügt bevorzugtermassen über eine Pfropfung in einem Bereich von 0.2-4.0 Gew.-%, insbesondere bevorzugt in einem Bereich von 0.5-2.5% Gew.-%, wobei die Gewichtsprozente jeweils auf die Gesamtmasse an Ethylen-Vinylacetat-Copolymer, inklusive Pfropfung, bezogen sind.

Komponente (E) ist weiter vorzugsweise zu weniger als 30%, besonders bevorzugt zu weniger als 10% verseift, vorzugsweise unverseift. Bevorzugt ist also das EVA weiterhin zu weniger als 30% verseift, d.h. der Anteil an Vinylalkoholgruppen ist bezogen auf die Summe der Vinylacetat- und Vinylalkoholgruppen im EVA (Komponente E) kleiner als 30 mol-%, besonders bevorzugt kleiner als 10 mol-%. Insbesondere ist bevorzugt, wenn das EVA unverseift vorliegt, d.h. der Verseifungsgrad beträgt 0%, und damit keine oder nahezu keine Vinylalkoholgruppen enthält.

Nun spezifisch betrachtet lässt sich die Komponente (E) alternativ oder zusätzlich wie folgt weiter allgemein charakterisieren gemäss einer oder mehrerer der folgenden weiteren bevorzugten Ausführungsformen:
Bevorzugtermassen verfügt das EVA über eine Molmasse im Bereich von 20'000 bis 500'000 g/mol, insbesondere bevorzugt im Bereich von 30'000 bis 300'000 g/mol.

Eine weitere bevorzugte Ausführungsform zeichnet sich wie gesagt dadurch aus, dass das Ethylen-Vinylacetat-Copolymer gepfropft ist, was insbesondere die Verträglichkeit mit dem Polyamid verbessert.

Bevorzugtermassen verfügt das Ethylen-Vinylacetat-Copolymer über Säure- oder Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Dabei werden dafür bevorzugtermassen Reagenzien ausgewählt aus der folgenden Gruppe eingesetzt: Acrylsäure, Methacrylsäure, Maleinsäure, Maleinsäureanhydrid, Maleinsäuremonobutylester, Fumarsäure, Aconitsäure, Glycidylacrylat, Glycidylmethacrylat und/oder Itaconsäureanhydrid. Vorzugsweise werden 0.1 bis 6.0 Gew.-% dieser Reagenzien, bevorzugt eines ungesättigten Anhydrids oder einer ungesättigten Carbonsäure an die Ethylen-Vinylacetat-Copolymere aufgepfropft, oder Carbonsäure oder Dicarbonsäureanhydrid oder dessen Vorstufe wird zusammen mit einem weiteren ungesättigten Monomeren aufgepfropft.

Die Pfropfung erfolgt besonders bevorzugt mit einem Reagenz ausgewählt aus der folgenden Gruppe: Acrylsäure, Methacrylsäure, Maleinsäureanhydrid, oder Kombinationen davon, vorzugsweise ist die Pfropfung ausgewählt als Acrylsäure.

Dabei verfügt das Ethylen-Vinylacetat-Copolymer der Komponente (E) bevorzugtermassen über eine Pfropfung in einem Bereich von 0.2-4.0 Gew.-%, insbesondere bevorzugt in einem Bereich von 0.5-2.5% Gew.-% , wobei die Gewichtsprozente jeweils auf die Gesamtmasse an Ethylen-Vinylacetat-Copolymer, inklusive Pfropfung, bezogen sind.

Bevorzugtermassen ist die Formmasse frei von weiterem Verträglichkeitsvermittler dann, wenn das verwendete EVA der Komponente (E) gepfropft ist.

Bevorzugtermassen ist das EVA der Komponente (E) weiterhin nicht vernetzt, d.h. die Formmassen sind frei von Vernetzern und Radikalbildnern.

Bevorzugtermassen findet ein EVA der Komponente (E) Verwendung, dessen EthylenAnteil 79-86 Gew.-% ist, dessen Vinylacetat-Gehalt 13-18 Gew.-% ist, und dessen Acrylsäure-Pfropfung 1-3 % ausmacht (jeweils auf das Gesamtgewicht bezogen). Beispiele für kommerziell erhältliche EVA-Systeme sind folgende: Scona TPEV 1110 PB, Scona TPEV 1112 PB, Scona TPEV 2113 PB, Scona TPEV 5010 PB, Evatane 18-150, Evatane 20-20, Evantane 28-40, Ultrathene UE672, Ultrathene UE635000, Atea 1075A, Atea 1241, Atea 2842AC.

### Komponente F:

Gemäss einer bevorzugten Ausführungsform liegt der Anteil an Additiven der Komponente (F) im Bereich von 0.1-2.0 Gew.-%, insbesondere im Bereich von 0.2-1.5 Gew.-%.

Die Additive der Komponente (F) sind weiterhin bevorzugtermassen ausgewählt aus der folgenden Gruppe oder einer Mischung davon: Haftvermittler, Kristallisations-Beschleuniger oder -Verzögerer, Antioxidantien, Antiozonantien, Lichtschutzmitteln, Hitzestabilisatoren, wie z.B. Phenole, Phosphite, aromatische Amine, Kupferhalogenide, insbesondere in Kombination mit Alkalihalogeniden, Ceroxidhydrate, Lathansalze, UV-Stabilisatoren, UV-Absorber, UV-Blocker, Gleitmittel, Entformungsmittel, Weichmacher, Verarbeitungshilfsmittel, Antistatika, anorganische und organische Pigmente, Farb- und Markierungsstoffe, Nanoteilchen in Plättchenform, Farbruss, wie z.B. Cabot Black Pearls 880 oder Corax N115, bevorzugt in Form von Farbruss-Masterbatch (-Konzentrat), wie z.B. Euthylenschwarz, Residuen aus Polymerisationsverfahren wie Katalysatoren, Salze und deren Derivate, sowie Regler wie Monosäuren oder Monoamine, und/oder wobei es sich um sauerstoff-, stickstoff- oder schwefelhaltige Metallverbindungen als Stabilisatoren, wobei Metalle wie Aluminium, Calcium, Barium, Natrium, Kalium, Magnesium und/oder Zink bevorzugt sind, und insbesondere bevorzugt Verbindungen ausgewählt aus der Gruppe der Oxide, Hydroxide, Carbonate, Silikate, Borate, Phosphate, Stannate sowie Kombinationen oder Mischungen dieser Verbindungen, wie Oxid-Hydroxide oder Oxid-Hydroxid-Carbonate sind. Im Hinblick auf die Kupferhalogenide werden bevorzugt Kupfer(I)bromid oder Kupfer(I)iodid in Kombination mit Alkalihalogeniden, insbesondere Kaliumbromid oder Kaliumiodid eingesetzt. Besonders bevorzugt wird die Kombination von Kupfer(I)iodid und Kaliumiodid, wobei das molare Verhältnis von Kupfer(I)iodid zu Kaliumiodid im Bereich von vorzugsweise 1 - 20, insbesondere von 4 - 12 liegt.Weiterhin betrifft die vorliegende Erfindung ein Formteil herstellbar oder hergestellt auch einer Formmasse wie oben dargestellt, insbesondere hergestellt in einem Spritzgussverfahren, Extrusionsblasverfahren oder einem Extrusionsverfahren.

Das Formteil kann in Form einer Folie, eines Profils oder eines Hohlkörpers, oder Verbindungselements vorliegen, einschliesslich Behälter, Leitungen, Steckverbindungselemente, Gehäuseteile, Befestigungselemente, Pumpenteile, Ventile, Verteiler, Deckel, Einspritzleisten, Einfüllstutzen, Pumpengehäuse, Kraftstofffiltergehäuse, Ventilgehäuse, insbesondere für den Automobilbereich einschliesslich solcher in Kontakt mit Chemikalien, insbesondere Treibstoff, methanolhaltiger Treibstoff, Kühlmittel, Harnstoff, Öle.

Weiter betrifft die Erfindung die Verwendung einer Polyamidformmasse, vorzugsweise in Form eines Formteils wie oben dargestellt, im Automobilbereich, bevorzugt als Leitungselement für Kraftstoffe, einschliesslich Kraftstoffleitungen, Kraftstoffbehälter, Einspritzleisten, Pumpen, Ventile, Pumpenteile sowie Verbindungs- und Befestigungselemente dafür, insbesondere Quick-Konnektoren.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Formmassen und der für die Messungen eingesetzten Formkörper:

Die Formmassen der Zusammensetzungen in Tabelle 1 und 2 wurden auf einem Zweiwellenextruder der Fa. Werner u. Pfleiderer Typ ZSK 25 hergestellt. Dazu wurden die Komponenten (A) und (D) bis (F) in die Einzugszone dosiert. Die Kohlenstofffasern (B) sowie die Glasfasern (C) wurden über einen Sidefeeder 3 Gehäuseeinheiten vor der Düse in die Polymerschmelze dosiert. Die Gehäusetemperatur wurde als aufsteigendes Profil bis 350°C eingestellt. Bei 150 bis 200 upm wurden 10 kg Durchsatz erreicht. Die Compounds wurden als Strang aus einer Düse mit 3 mm Durchmesser abgezogen und nach Wasserkühlung granuliert. Nach Granulierung und Trocknung bei 110°C für 24h wurden die Granulateigenschaften gemessen und die Prüfkörper hergestellt.

Die Prüfkörper wurden auf einer Arburg Allrounder 320-210-750 Spritzgussmaschine hergestellt, wobei die Zylindertemperaturen von 310°C bis 350°C und eine Schneckenumfangsgeschwindigkeit von 15 m/min eingestellt wurden. Die Formtemperatur wurde mit 100 - 140°C gewählt.

**Folgende Ausgangsmaterialien wurden eingesetzt:**

| | |
|---|---|
| PA-1 | Polyamid PA 6T/66 (55:45) mit einer relativen Viskosität von 1.67, einem Schmelzpunkt von 310°C und einer Schmelzenthalpie von ΔHm = 62 J/g |
| PA-2 | Polyamid PA 66 mit einer relativen Viskosität von 1.85 und einem Schmelzpunkt von 260°C |
| PA-3 | Polyamid PA 6T/6I (70:30) mit einer relativen Viskosität von 1.58, einem Schmelzpunkt von 325°C und einer Schmelzenthalpie von ΔHm = 55 J/g |
| PA-4 | Polyamid PA 6T/MPDT (50:50) mit einer relativen Viskosität von 1.62, einem Schmelzpunkt von 305°C und einer Schmelzenthalpie von ΔHm = 45 J/g |
| SZM-1 | Schlagzähmodifier auf Basis Ethylen/Propylen- und Ethylen/Butylen-Copolymeren, Tafmer MC201, Mitsui |
| SZM-2 | Ethylen/Glycidylmethacrylat-Copolymer aus 92% Ethen und 8% Glycidylmethacrylat, MFR = 5 g/10 min. (ISO 1133, 190°C/2.16 kg), Lotader AX 8840, Arkema |
| SZM-3 | Schlagzähmodifier auf Basis eines Maleinsäureanhydrid-modifizierten (100 µeq/g) α-Olefin Polymers (Ethylen/Butylen-Copolymer), Tafmer MH-7010, Mitsui |
| EVA | Ethylen-Vinylacetat-Copolymer, enthaltend 14 Gew.-% Vinylacetat und gepfropft mit 2 Gew.-% Acrylsäure, Scona TPEV 1110 PB, BYK |
| GF | Glasfaser, Vetrotex 995-10C, Länge 4.5 mm, Durchmesser 10µm (Glasfaser mit runder Querschnittsfläche) |
| CF | Kohlenstofffaser, Tenax E-HT C604, Länge 6 mm, Durchmesser 6 µm (Kohlenstofffaser mit runder Querschnittsfläche), Toho Tenax Europe GmbH (DE) |
| CB | Elektrisch leitfähiger Russ mit einer DBP-Absorption von 480-510 ml/100g, Ketjenblack EC-600 JD, AkzoNobel |
| Additive | Mischung aus 0.15 Gew.-% Irganox 1098 (BASF), 0.15 Gew.-% Hostanox PAR24 (Clariant) und 0.2 Gew.-% Polywhite B (Imerys), jeweils bezogen auf die gesamte Formmasse. |

### Resultate:

In den Tabellen werden die Zusammensetzungen der Beispiele (Tabelle 1) und Vergleichsbeispiele (Tabelle 2) und der Resultate der Messungen an den daraus hergestellten Testkörpern zusammengefasst.

**Tabelle 1: Zusammensetzungen und Messungen an den Beispielen nach der Erfindung**

| | | | **B1** | **B2** | **B3** | **B4** | **B5** | **B6** | **B7** |
|---|---|---|---|---|---|---|---|---|---|
| PA-1 | | Gew.-% | 55.5 | 56.5 | 54.5 | 58.6 | 55.0 | 50.0 | |
| PA-2 | | Gew.-% | | | 4.0 | | | | |
| PA-3 | | Gew.-% | | | | | | | 57.5 |
| SZM-1 | | Gew.-% | | | | 6.0 | 4.5 | 4.5 | |
| SZM-2 | | Gew.-% | 3.0 | 3.0 | | | | | 7.0 |
| EVA | | Gew.-% | 6.0 | 6.0 | 6.0 | | | | |
| GF | | Gew.-% | 20.0 | 20.0 | 20.0 | 20.0 | 25.0 | 30.0 | 20.0 |
| CF | | Gew.-% | 15.0 | 14.0 | 15.0 | 15.0 | 15.0 | 15.0 | 15.0 |
| Additive | | Gew.-% | 0.5 | 0.5 | 0.5 | 0.5 | 0.5 | 0.5 | 0.5 |
| | | | | | | | | | |
| Oberflächenwiderstand je nach Lagerdauer in CM15 | 0 h | Ohm | 27 | 44 | 37 | 45 | 10 | 72 | 25 |
| | 100 h | Ohm | 260 | 450 | 500 | 380 | 110 | 570 | 170 |
| | 5000 h | Ohm | 8.8E+2 | 6.2E+3 | 4.5E+3 | 1.1E+5 | 8.9E+4 | 3.1E+5 | 4.9E+4 |
| Volumenwiderstand je nach Lagerdauer in CM15 | 0 h | Ohm*m | 0.7 | 1.1 | 0.7 | 3.9 | 2.6 | 2.8 | 2.9 |
| | 100 h | Ohm*m | 3.8 | 12.5 | 6.7 | 46 | 530 | 20 | 450 |
| | 5000 h | Ohm*m | 49 | 90 | 55 | 3.8E+2 | 4.5E+2 | 7.5E+2 | 4.1E+2 |
| Zug-E-Modul | tr./23°C | MPa | 18350 | 18100 | 18400 | 18100 | 18500 | 19900 | 18300 |
| Bruchfestigkeit | tr./23°C | MPa | 212 | 208 | 220 | 208 | 198 | 212 | 208 |
| Bruchdehnung | tr./23°C | % | 1.8 | 1.9 | 1.8 | 2.0 | 1.7 | 1.8 | 1.7 |
| Schlagzähigkeit | tr./23°C | kJ/m² | 65 | 68 | 54 | 64 | 60 | 55 | 64 |
| Kerbschlagzähigkeit | tr./23°C | kJ/m² | 10 | 10 | 7.5 | 10 | 10 | 9.4 | 9.2 |
| Oberflächenqualität | | - | + | + | + | ○ | ○ | ○ | ○ |
| MVR (330°C/10kg) | | cm³/ 10min | 237 | 250 | 214 | 92 | 66 | 55 | 86 |
| HDT A (1.80 MPa) | | °C | > 280 | > 280 | > 280 | > 280 | > 280 | > 280 | > 280 |
| HDT C (8.00 MPa) | | °C | 224 | 220 | 220 | 193 | 202 | 215 | 195 |

**Tabelle 2: Zusammensetzungen und Messungen an den Vergleichsbeispielen**

| | | | **VB1** | **VB2** | **VB3** | **VB4** | **VB5** | **VB6** |
|---|---|---|---|---|---|---|---|---|
| PA-1 | | Gew.-% | 60.0 | 79.5 | 75.5 | 72.5 | | 59.5 |
| PA-3 | | Gew.-% | | | | | 72.5 | |
| SZM-1 | | Gew.-% | 4.5 | 5.0 | 6.0 | | | 5.0 |
| SZM-2 | | Gew.-% | | | | 3.0 | 7.0 | |
| EVA | | Gew.-% | | | | 6.0 | | |
| GF | | Gew.-% | 25.0 | | | | | 25.0 |
| CF | | Gew.-% | 10.0 | 15.0 | 18.0 | 18.0 | 20.0 | |
| CB | | Gew.-% | | | | | | 10.0 |
| Additive | | Gew.-% | 0.5 | 0.5 | 0.5 | 0.5 | 0.5 | 0.5 |
| | | | | | | | | |
| Oberflächenwiderstand je nach Lagerdauer in CM15 | 0 h | Ohm | 3.4E+4 | 2.3E+4 | 4.2 | 4.0 | 1.8E+2 | 2.3E+1 |
| | 100 h | Ohm | 2.9E+7 | 2.1E+8 | 5.5E+6 | 2.8E+6 | 4.7E+8 | 3.1E+1 |
| | 5000 h | Ohm | n.b. | n.b. | 2.7E+8 | 7.1E+7 | n.b. | 2.5E+3 |
| Volumenwiderstand je nach Lagerdauer in CM15 | 0 h | Ohm*m | 4.5E+3 | 3.2E+5 | 62 | 60 | 3.6 | 8.6E-2 |
| | 100 h | Ohm*m | 2.8E+8 | 1.6E+7 | 4.7E+5 | 1.9E+5 | 1.1E+7 | 2.1E-1 |
| | 5000 h | Ohm*m | n.b. | n.b. | 2.7E+7 | 2.3E+7 | n.b. | n.b. |
| Zug-E-Modul | tr./23°C | MPa | 14600 | 11100 | 14700 | 14500 | 16200 | 8500 |
| Bruchfestigkeit | tr./23°C | MPa | 188 | 180 | 209 | 204 | 216 | 63 |
| Bruchdehnung | tr./23°C | % | 2.2 | 3.5 | 3.0 | 3.0 | 2.4 | 0.8 |
| Schlagzähigkeit | tr./23°C | kJ/m² | 64 | 72 | 69 | 63 | 63 | 14 |
| Kerbschlagzähigkeit | tr./23°C | kJ/m² | 11 | 10 | 11 | 10 | 9.6 | 3.8 |
| Oberflächenqualität | | - | ○ | ○ | ○ | + | ○ | ○ |
| MVR (330°C/10kg) | | cm³/10min | 32 | 34 | 31 | 210 | 55 | 12 |
| HDT A (1.80 MPa) | | °C | 277 | 244 | 266 | 262 | 234 | 205 |
| HDT C (8.00 MPa) | | °C | 151 | 100 | 143 | 131 | 130 | 97 |

| | | | | | | | | |
|---|---|---|---|---|---|---|---|---|
| n.b.: nicht bestimmt | | | | | | | | |

**Tabelle 3: Zusammensetzungen und Messungen an den weiteren Vergleichsbeispielen**

| | | | **VB7** | **VB8** | **VB9** |
|---|---|---|---|---|---|
| | | | | | |
| PA-1 | | Gew.-% | 69.5 | 67.5 | |
| PA-4 | | Gew.-% | | | 69.5 |
| | | | | | |
| Tafiner MH-7010 | | Gew.-% | 5.0 | 5.0 | 5.0 |
| GF | | Gew.-% | 10.0 | 10.0 | 10.0 |
| CF | | Gew.-% | 15.0 | 17.0 | 15.0 |
| Additive | | Gew.-% | 0.5 | 0.5 | 0.5 |
| | | | | | |
| Oberflächenwiderstand je nach Lagerdauer in CM15 | 0 h | Ohm | 2.0E+3 | 1.0E+3 | 1.7E+2 |
| | 100 h | Ohm | 3.9E+8 | 7.0E+8 | 1.4E+9 |
| | 5000 h | Ohm | n.b. | n.b. | n.b. |
| Volumenwiderstand je nach Lagerdauer in CM15 | 0 h | Ohm*m | 5.5E+1 | 2.3E+1 | 1.1E+1 |
| | 100 h | Ohm*m | 1.1E+7 | 6.6E+4 | 4.6E+7 |
| | 5000 h | Ohm*m | n.b. | 3.4E+7 | n.b. |
| Zug-E-Modul | tr./23 °C | MPa | 13700 | 15300 | 13800 |
| Bruchfestigkeit | tr./23°C | MPa | 183 | 193 | 185 |
| Bruchdehnung | tr./23°C | % | 2.9 | 2.3 | 2.8 |
| Schlagzäh igkeit | tr./23°C | kJ/m² | 71 | 65 | 70 |
| Kerbschlagzähigkeit | tr./23°C | kJ/m² | 10 | 9.3 | 9 |
| Oberflächen qualität | | - | ○ | ○ | ○ |
| MVR (330°C/10kg) | | cm³/10min | 44 | 40 | 34 |
| HDT A (1.80 MPa) | | °C | 264 | 278 | 262 |
| HDT C (8.00 MPa) | | °C | 161 | 164 | 165 |

| | | | | | |
|---|---|---|---|---|---|
| n.b.: nicht bestimmt | | | | | |

### Messverfahren:

Die Messungen für die Werte aus den Tabellen 1 und 2 respektive zur Charakterisierung der Ausgangsmaterialien wurden nach folgenden Normen und an folgenden Prüfkörpern, und falls in den folgenden Tabellen nicht anders vermerkt, in trockenem Zustand, durchgeführt.

### Zug-E-Modul:

ISO 527 (Teil 1 und 2, 2012-02) mit einer Zuggeschwindigkeit von 1 mm/min, Temperatur 23 °C; ISO-Zugstab, Norm: ISO/CD 3167, Typ A1, 170 x 20/10 x 4 mm,

### Bruchfestigkeit und Bruchdehnung:

ISO 527 (Teil 1 und 2, 2012-02) mit einer Zuggeschwindigkeit von 5 mm/min, Temperatur 23°C; ISO-Zugstab, Norm: ISO/CD 3167, Typ A1, 170 x 20/10 x 4 mm.

### Relative Viskosität:

DIN EN ISO 307 (2013-08), in 0,5 Gew.-%-iger m-Kresollösung, Temperatur 20 °C.

### Thermisches Verhalten (Schmelzpunkt, Schmelzenthalpie und Glasumwandlungstemperatur (Tg):

ISO-Norm 11357-1 (2009-10), -2 (2013-05) und -3 (2011-05); die Differential Scanning Calorimetry (DSC) wird mit Aufheizrate von 20 °C/min durchgeführt am Granulat.

### Schlagzähigkeit und Kerbschlagzähigkeit nach Charpy:

ISO 179/keU (2010-11, 2011-06), Temperatur 23°C; ISO-Prüfstab, Norm: ISO/CD 3167, Typ B1, 80 x 10 x 4mm.

### Wärmeformbeständigkeit HDT A (1,80 MPa), HDT A (8.00 MPa)

DIN EN ISO 75-1,-2 (2013-04); ISO-Schlagstab mit der Dimension 80x10x4 mm (in Flachkantposition).

### Spezifischer elektrischer Volumenwiderstand:

### (auch spezifischer Durchgangswiderstand genannt, in [Ohm*m])

DIN IEC 60093:1993-12; Platten 100 x 100 x 2 mm mit Leitsilber kontaktiert; Strom-Spannungsmessverfahren; runde Kupferelektroden mit einem Durchmesser von 30 mm werden an gegenüberliegenden Seiten der Probeplatten angeordnet; die Messspannung beträgt 100V bis zu einem Durchgangswiderstand von 300 Mega-Ohm, darüber 500 V (jeweils Gleichspannung); Messung erfolgt innerhalb von 20 Minuten nach Entnahme der trocken gelagerten Platten im Normraumklima bei 23°C und 50% relativer Feuchte; die in den Tabellen angegebenen Werte sind Mittelwerte, bestimmt anhand von unabhängigen Messungen an 5 verschiedenen Platten, hergestellt aus der Formmasse des jeweiligen Beispiels.

### Spezifischer elektrischer Oberflächenwiderstand:

### (wegen der Elektrodenanordnung auch als Ω square bezeichnet, in [Ohm])

DIN IEC 60093:1993-12; Platten 100 x 100 x 2 mm mit Leitsilber kontaktiert; Strom-Spannungsmessverfahren, Kupferelektroden 10 x 10 x 100 mm im Abstand von 10mm; die Messspannung beträgt 100V bis zu einem Oberflächenwiderstand von 300 Mega-Ohm, darüber 500 V (jeweils Gleichspannung); Messung erfolgt innerhalb von 20 Minuten nach Entnahme der trocken gelagerten Platten im Normraumklima bei 23°C und 50% relativer Feuchte; die in den Tabellen angegebenen Werte sind Mittelwerte, bestimmt anhand von unabhängigen Messungen an 5 verschiedenen Platten, hergestellt aus der Formmasse des jeweiligen Beispiels.

### MVR (Melt Volume Flow Rate) als Mass für das Fliessverhalten

ISO 1133 (2011-12) bei einer Temperatur von 330°C und einer Belastung von 10.0 kg.

### Oberflächenqualität:

Visuelle Beurteilung der spritzgegossenen Formteile (Platten 100 x 100 x 2 mm und Konnektoren für Rohre mit 8 mm Aussendurchmesser) :
○: inhomogene, matte, raue Oberfläche; sichtbare Schlieren und Verstärkungsfasern
+: homogene, glatte, geschlossene Oberfläche über das gesamte Formteil

### Lagerung in Testbenzin:

Um den Einfluss von Benzin auf die elektrischen Widerstandswerte zu untersuchen, wurden Platten 100 x 100 x 2 mm (trocken wie hergestellt) bei 60°C in Testbenzin CM15, bestehend aus 42.5 Vol.-% Toluol, 42.5 Vol.-% Isooctan und 15 Vol.-% Methanol, bis zu maximal 5000 Stunden (h) gelagert, wobei Proben zu verschiedenen Zeitpunkten entnommen wurden. Dazu wurden die Testkörper im Testbenzin auf 23°C abgekühlt, nach dem Entnehmen aus dem Testbenzin mit einem Baumwolltuch abgerieben und im Exsikkator über einem Trockenmittel (Silikagel) gelagert. Die Bestimmung des Oberflächen- und Volumenwiderstands erfolgte innerhalb von 24 h nach Entnahme aus dem Testbenzin. Als Vergleich wurden die Widerstandswerte der Platten, trocken wie hergestellt, ohne Benzinlagerung bestimmt (0 Stunden (0 h) Lagerung). Neben diesem Ausgangswert werden in den Tabellen die Widerstandswerte für eine Lagerdauer von 100 Stunden (100 h) und 5000 Stunden (5000 h) angegeben.

### Diskussion:

Das Vergleichsbeispiel VB1 zeigt, dass eine Polyamid-Formmasse mit 10 % Kohlestofffasern und 25% Glasfasern zwar direkt nach der Herstellung eine genügende Leitfähigkeit aufweist, nach Lagerung in CM15 aber bereits nach 100 Stunden der geforderte Grenzwert von 1E+6 für den spez. Oberflächenwiderstand überschritten wird. Wird als elektrisch leitfähiges Agens anstatt der Kohlestofffasern wie in VB6 Leitruss eingesetzt, so wird die geforderte Leitfähigkeit auch nach 5000 Stunden Lagerung in CM15 erreicht, aber die mechanischen Eigenschaften der Formmasse sind ungenügend. Werden als Verstärkungsfasern und als elektrisch leitfähiges Agens ausschliesslich Kohlestofffasern eingesetzt, so zeigen die Versuche VB2 bis VB5, dass keine ausreichende Leitfähigkeit nach Lagerung in CM15 erreicht wird, auch dann nicht, wenn die CF-Konzentration von 15 auf 20 Gew.-% erhöht wird. Die CF-verstärkten Formmassen haben gute mechanische Eigenschaften, allerdings bei niedrigem E-Modul.

Die Vergleichsbeispiele VB2-VB5 zeigen also auf, dass die Untergrenze für den Anteil an Kohlefasern wichtig ist, und dass es auf die gleichzeitige Anwesenheit von Kohlefasern und Glasfasern in den beanspruchten Proportionen ankommt.

Die Vergleichsbeispiele VB7-VB9 zeigen Formmassen, bei welchen der Anteil an Kohlefasern im Bereich von 13-22 Gewichtsprozent liegt, bei welchen hingegen der Anteil an Glasfasern nicht im Bereich von 18-30 Gewichtsprozent liegt, sondern tiefer. Bei diesen Vergleichsbeispielen zeigt sich, dass auch bei diesen Formmassen unerwarteter Weise trotz des hohen Anteils an Kohlefasern und der gleichzeitigen Anwesenheit von Glasfasern der Oberflächenwiderstand und der Volumenwiderstand schnell zunehmen. Unterhalb der Grenze von 18 Gewichtsprozent Glasfasern hören also unerwarteter Weise die vorteilhaften Eigenschaften auf. Weiterhin ist die Oberflächenqualität bei diesen Formmassen VB7-VB9 ungenügend und die mechanischen Eigenschaften sind ebenfalls meist den Werten aus den erfindungsgemässen Formmassen wie in Tab. 1 dokumentiert unterlegen.

Werden als Polyamid-Matrix Systeme auf Basis kurzkettiger aliphatischer Diamine bei zu tiefem Glasfasergehalt eingesetzt, nehmen Oberflächenwiderstand und Volumenwiderstand bereits nach einer Lagerung von 100 Stunden inakzeptabel zu.

Die erfindungsgemässen Beispiele B1 bis B7 belegen, dass bei gleichzeitigem Einsatz von Kohlestofffasern und Glasfasern in geeignetem Verhältnis Formmassen resultieren, die auch nach 5000 Stunden Lagerung in CM15 den Grenzwert für den spezifischen Oberflächenwiderstand von 1E+6 Ohm nicht überschreiten. Zudem weisen diese Formmassen gute mechanische Eigenschaften und einen hohem E-Modul auf. Die Formmassen in B1 bis B3 besitzen darüber hinaus ein exzellentes Fliessvermögen und ergeben Formkörper mit guter Oberflächenqualität. Gleichzeitig wird die Beibehaltung der elektrischen Leitfähigkeit durch Zusatz von Ethylen-Vinylacetat-Copolymer weiter verbessert. So haben die Formmassen der Beispiele B1 bis B3 im Vergleich zu den Beispielen B4 bis B7 einen um den Faktor 10 - 100 niedrigeren spezifischen Oberflächenwiderstand nach 5000 Stunden Lagerung bei 60°C in CM15.

## Patentansprüche

1. Polyamidformmasse bestehend aus den folgenden Komponenten:
(A) 35 - 68 Gew.-% wenigstens eines teilkristallinen, teilaromatischen, thermoplastischen Polyamids mit einer Schmelztemperatur (Tₘ) von wenigstens 270°C, gemessen nach ISO-Norm 11357-3 am Granulat mit einer Aufheizrate von 20°C/min;
wobei die Komponente (A) aufgebaut ist aus:
(A1) 25 - 100 Mol-% Terephthalsäure, bezogen auf den Gesamtgehalt an anwesenden Dicarbonsäuren,
0 - 75 Mol-%, bezogen auf den Gesamtgehalt an anwesenden Dicarbonsäuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 50 - 100 Mol-%, bezogen auf den Gesamtgehalt an anwesenden Diaminen, wenigstens eines aliphatischen Diamins mit 4 - 8 Kohlenstoffatomen,
0 - 50 Mol-% bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin mit 8 bis 20 C-Atomen,
wobei der prozentuale Molgehalt an Dicarbonsäuren 100 Mol-% und der prozentuale Molgehalt an Diaminen 100 Mol-% ausmacht,
sowie aus:
(A3) 0 - 100 Mol-% Aminocarbonsäuren und/oder Lactame mit 4 bis 36 Kohlenstoffatomen, vorzugsweise mit 6 bis 12 Kohlenstoffatomen, mit der Massgabe, dass die Konzentration von (A3) höchstens 40 Gew.-% bezogen auf die Summe von (A1) bis (A3) ausmacht,
(B) 13 - 22 Gew.-% Kohlenstofffasern;
(C) 18 - 30 Gew.-% Glasfasern;
(D) 1 - 10 Gew.-% Schlagzähmodifikator verschieden von (E) und/oder Polymere verschieden von (A), (E) und (F);
(E) 0 - 10 Gew.-% Ethylen-Vinylacetat-Copolymer;
(F) 0 - 3 Gew.-% Additive wobei die Summe der Komponenten (A)-(F) 100 Gew.-% beträgt,
die Summe der Komponenten (B)-(C) im Bereich von 33 bis 48 Gew.-%, und
die Summe der Komponenten (D)-(E) im Bereich von 1 bis 12 Gew.-% liegt.

2. Polyamidformmasse nach Anspruch 1, **dadurch gekennzeichnet, dass** der Anteil an Komponente (A) im Bereich von 40 - 62.9 Gew.-% liegt, vorzugsweise im Bereich von 50 - 58.8 Gew.-%;
oder dass der Anteil an Komponente (B) im Bereich von 14 - 20 Gew.-% liegt, vorzugsweise im Bereich von 15 - 18 Gew.-%;
oder dass der Anteil an Komponente (C) im Bereich von 20 - 28 Gew.-% liegt, vorzugsweise im Bereich von 20 - 25 Gew.-%
oder dass der Anteil an Komponente (D) im Bereich von 2 - 8 Gew.-% liegt, vorzugsweise im Bereich von 3 - 6 Gew.-%;
oder dass der Anteil an Komponente (E) im Bereich von 1 - 8 Gew.-% liegt, vorzugsweise im Bereich von 2 - 7 oder 2 - 6 Gew.-%;
oder dass der Anteil an Komponente (F) im Bereich von 0.1 - 2.0 Gew.-% liegt, vorzugsweise im Bereich von 0.2 - 1.5 Gew.-%
oder dass die Summe der Komponenten (B)-(C) im Bereich von 34-45 Gew.-%, vorzugsweise im Bereich von 35-40 Gew.-%,
oder die Summe der Komponenten (D)-(E) im Bereich von 2 - 10 Gew.-%, vorzugsweise im Bereich von 3 - 9 oder 4 - 9 Gew.-%.

3. Polyamidformmasse nach einem der vorhergehenden Ansprüche, **dadurch gekennzeichnet, dass** die Komponente (A) ein Polyamid oder eine Mischung von Polyamiden ist, welches eine Schmelztemperatur (Tₘ), gemessen nach ISO-Norm 11357-3 am Granulat mit einer Aufheizrate von 20 °C/min, im Bereich von 280°C bis 340°C, vorzugsweise im Bereich von 285 °C bis 330 °C aufweist, wobei vorzugsweise bei Vorliegen einer Mischung als Komponente (A) nicht nur die Mischung über eine derartige Schmelztemperatur verfügt, sondern auch jede der individuellen Komponenten innerhalb von (A);
und/oder dass die Schmelzenthalpie von Komponente (A), im Bereich von 30 bis 70 J/g, insbesondere 40 bis 65 J/g beträgt, wobei vorzugsweise bei Vorliegen einer Mischung als Komponente (A) nicht nur die Mischung über eine derartige Schmelzenthalpie verfügt, sondern auch jede der individuellen Komponenten innerhalb von (A);
und/oder dass die Komponente (A) eine Lösungsviskosität aufweist, gemessen nach ISO 307 in m-Kresol (0,5 Gew.-%, 20°C) von ηᵣₑₗ kleiner 2,6, bevorzugt von ηᵣₑₗ kleiner 2,3, insbesondere von ηᵣₑₗ kleiner 2,0 und von ηᵣₑₗ wenigstens 1,4, bevorzugt von ηᵣₑₗ wenigstens 1,5, insbesondere von ηᵣₑₗ wenigstens 1,55, wobei vorzugsweise bei Vorliegen einer Mischung als Komponente (A) nicht nur die Mischung über eine derartige Lösungsviskosität verfügt, sondern auch jede der individuellen Komponenten innerhalb von (A).

4. Polyamidformmasse nach einem der vorhergehenden Ansprüche, **dadurch gekennzeichnet, dass** das Polyamid oder die Polyamide der Komponente (A), bevorzugtermassen dann, wenn die Komponente (A) im Wesentlichen nur durch ein teilkristallines teilaromatisches Polyamid gebildet wird, aufgebaut aus:
(A1) 40 - 100 Mol-%, vorzugsweise 50 - 80 Mol%, Terephthalsäure, bezogen auf den Gesamtgehalt an anwesenden Dicarbonsäuren,
0 - 60 Mol-%, vorzugsweise 20 - 50 Mol%, bezogen auf den Gesamtgehalt an anwesenden Dicarbonsäuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 50 - 100 Mol-%, insbesondere vorzugsweise 80 - 100 Mol%, bezogen auf den Gesamtgehalt an anwesenden Diaminen, wenigstens eines aliphatischen Diamins mit 4 - 8, vorzugsweise mit 6 Kohlenstoffatomen, 0 - 50 Mol-%, insbesondere vorzugsweise 0 - 20 Mol%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin mit 8 bis 20 C-Atomen, wobei der prozentuale Molgehalt an Dicarbonsäuren 100 Mol-% und der prozentuale Molgehalt an Diaminen 100 Mol-% ausmacht,
sowie aus:
(A3) 0 - 100 Mol-% Aminocarbonsäuren und/oder Lactame mit 4 bis 36 Kohlenstoffatomen, vorzugsweise mit 6 bis 12 Kohlenstoffatomen,
mit der Massgabe, dass die Konzentration von (A3) höchstens 40 Gew.-%, bevorzugt höchstens 30 Gew.-%, insbesondere höchstens 20 Gew.-% bezogen auf die Summe von (A1) bis (A3) ausmacht.

5. Polyamidformmasse nach einem der vorhergehenden Ansprüche, **dadurch gekennzeichnet, dass** das Polyamid oder die Polyamide der Komponente (A) ausgewählt sind aus der folgenden Gruppe: PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/MPDT, PA 6T/6I/66, PA 6T/6I/6, PA 6T/6I/12, PA 6T/66/6, PA 6T/66/12, PA 6T/6I/MACMI, PA 6T/66/PACM6, oder eine Mischung derartiger Systeme, vorzugsweise ausgewählt als PA 6T/6I, PA 6T/66, wobei der Anteil an Terephthalsäure in der Komponente vorzugsweise wenigstens 50 Mol-% ausmacht, vorzugsweise wenigstens 52 Mol-%, insbesondere vorzugsweise wenigstens 54 Mol-%, und ganz besonders bevorzugt wenigstens 62 Mol-%.

6. Polyamidformmasse nach einem der vorhergehenden Ansprüche, **dadurch gekennzeichnet, dass** die Komponente (A) gebildet wird durch wenigstens ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten,
und/oder dass die Komponente (A) gebildet wird durch wenigstens ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 50 bis 65 Mol-% Hexamethylenterephthalamid-Einheiten und 35 bis 50 Mol-% Hexamethylenadipamid-Einheiten insbesondere vorzugsweise mit 52 bis 62 Mol-% Hexamethylenterephthalamid-Einheiten und 38 bis 48 Mol-% Hexamethylenadipamid
und/oder dass die Komponente (A) gebildet wird durch wenigstens ein teilkristallines ternäres Polyamid 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten,
und/oder dass die Komponente (A) gebildet wird durch wenigstens ein 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH2)n-1-CO-, wobei n = 6, 11 oder 12 ist, oder durch ein 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel -NH-(CH2)n-1-CO-, wobei n gleich 6, 11 oder 12 ist, oder durch ein 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel -NH-(CH2)n-1-CO-, wobei n gleich 6, 11 oder 12 ist, oder durch ein 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH2)n-1-CO-, wobei n gleich 6, 11 oder 12 ist.

7. Polyamidformmasse nach einem der vorhergehenden Ansprüche, **dadurch gekennzeichnet, dass** die Komponente (B) als geschnittene Fasern oder als geschnittenes oder endloses Faserbündel ausgebildet sind,
oder dass die Fasern der Komponente (B) eine Länge von 0.1 bis 50 mm, bevorzugt von 1 bis 12 mm aufweisen und/oder einen Durchmesser von 5 bis 40 µm, insbesondere bevorzugt von 5 bis 10 µm,
oder dass die Fasern der Komponente (B) auf Basis von PAN-, Pech- oder Cellulose-basierten Fasern ausgebildet sind,
oder dass die Fasern der Komponente (B) anisotrop ausgebildet sind oder dass die Fasern der Komponente (B) als Kohlenstofffaserbündel ausgebildet sind aus mehreren hundert bis hunderttausend Einzelfilamenten, die einem Durchmesser von 5 bis 10 µm, eine Zugfestigkeit von 1000 bis 7000 MPa und einen Elastizitätsmodul von 200 bis 700 GPa aufweisen.

8. Polyamidformmasse nach einem der vorhergehenden Ansprüche, **dadurch gekennzeichnet, dass** die Fasern der Komponente (C) eine kreisförmige oder nicht-kreisförmige Querschnittfläche aufweisen, wobei im Fall von Glasfasern mit nicht-kreisförmiger Querschnittfläche solche mit einem Abmessungsverhältnis von der Hauptquerschnittsachse zur senkrecht darauf stehenden Nebenquerschnittsachse von mehr als 2, bevorzugt von 2 bis 8, insbesondere von 2.5 bis 5 bevorzugt eingesetzt werden, und/oder wobei im Fall von Glasfasern mit nicht-kreisförmiger Querschnittfläche die Länge der Hauptquerschnittsachse bevorzugt im Bereich von 6 bis 40 µm, insbesondere im Bereich von 15 bis 30 µm und die Länge der Nebenquerschnittsachse bevorzugt im Bereich von 3 bis 20 µm, insbesondere im Bereich von 4 bis 10 µm liegt.

9. Polyamidformmasse nach einem der vorhergehenden Ansprüche, **dadurch gekennzeichnet, dass** die Fasern der Komponente (C) Glasfasern sind, die aus den Komponenten Siliciumdioxid, Calciumoxid, Magnesiumoxid und Aluminiumoxid aufgebaut sind oder aus diesen Komponenten bestehen und das Gewichtsverhältnis SiO2/(CaO+MgO) kleiner 2.7, bevorzugt kleiner 2.5 und insbesondere zwischen 2.1 und 2.4 ist, und/oder Glasfasern sind, die auf dem ternären System Siliciumdioxid-Aluminiumoxid-Magnesiumoxid oder auf dem quaternären System Siliciumdioxid-Aluminiumoxid-Magnesiumoxid-Calciumoxid beruhen, wobei eine Zusammensetzung von 58-70 Gew.-% Siliciumdioxid (SiO2), 15-30 Gew.-% Aluminiumoxid (Al2O3), 5-15 Gew.-% Magnesiumoxid (MgO), 0-10 Gew.-% Calciumoxid (CaO) und 0-2 Gew.-% weitere Oxide, insbesondere Zirkoniumdioxid (ZrO2), Boroxid (B2O3), Titandioxid (TiO2) oder Lithiumoxid (Li2O), eingesetzt ist,
und/oder dass die Fasern der Komponente (C) Glasfasern mit kreisförmigem Querschnitt sind mit einem Durchmesser im Bereich von 5-20 µm, bevorzugt im Bereich von 6-17 µm und besonders bevorzugt im Bereich von 6-13 µm, wobei diese bevorzugt als Kurzglasfaser, insbesondere als Schnittglas mit einer Länge von 0.2 bis 20 mm, bevorzugt 2-12 mm, eingesetzt sind.

10. Polyamidformmasse nach einem der vorhergehenden Ansprüche, **dadurch gekennzeichnet, dass** Komponente (D), soweit als Schlagzähmodifikator verschieden von (E) ausgewählt, ausgewählt ist aus der folgenden Gruppe:
Naturkautschuk, Pfropfkautschuk, Homopolymere oder Copolymere von Olefinen und/oder Styrolen und deren Derivate und/oder Acrylaten und deren Derivate und/oder Vinylacetaten und deren Derivate und/oder Anhydriden, wobei die Systeme ungepfropft oder gepfropft sein können, insbesondere (Block)Copolymere auf Basis von wenigstens einem oder einer Kombination folgender Bausteine: Polybutadien, Polyisopren, Polyisobutylen, Mischpolymerisat des Butadiens und/oder Isoprens mit Styrol oder Styrolderivaten und anderen Comonomeren, hydrierte Mischpolymerisate und oder Mischpolymerisate, die durch Pfropfen oder Copolymerisation mit Säureanhydriden, (Meth)acrylsäure und deren Ester entstanden sind, auf Styrol beruhende Blockcopolymere, Ethylen-α-Olefin-Copolymere, Ethylen-Acrylat- oder Ethylen-Butylen-Acrylat-Copolymere, Ethylen, Propylen, Buten-1, einschliesslich Copolymere von Olefinen und copolymerisierbaren Monomeren, wie insbesondere (Meth)acrylsäureester und Methylhexadien, wobei diese Systeme auch als Ionomer vorliegen können, in welchem die polymergebundenen Carboxylgruppen ganz oder teilweise durch Metallionen miteinander verbunden sind,
wobei besonders bevorzugt folgendes Systeme sind: durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

11. Polyamidformmasse nach einem der vorhergehenden Ansprüche, **dadurch gekennzeichnet, dass** Komponente (D), soweit als Polymer verschieden von (A), (E) und (F) ausgewählt, ausgewählt ist aus der folgenden Gruppe: aliphatisches Polyamid, vorzugsweise ausgewählt aus der Gruppe PA 6, PA 46, PA 56, PA 66, PA 66/6, PA 69, PA 610, PA 612, PA 614, und Polyolefin. Besonders bevorzugt wird PA 6, PA 66 und LDPE.

12. Polyamidformmasse nach einem der vorhergehenden Ansprüche, **dadurch gekennzeichnet, dass** Komponente (E) ein Ethylen-Vinylacetat-Copolymer mit einem Gehalt an Vinylacetat von 5-35 %, vorzugsweise 8-25 %, insbesondere vorzugsweise 10-20 % ist, wobei die Prozente jeweils auf die Gesamtmasse an Ethylen-Vinylacetat-Copolymer, inklusive gegebenenfalls vorhandener Pfropfung, bezogen sind,
und/oder dass Komponente (E) vorzugsweise über eine Molmasse im Bereich von 20'000 bis 500'000 g/mol, insbesondere bevorzugt im Bereich von 30'000 bis 300'000 g/mol verfügt,
und/oder dass Komponente (E) gepfropft ist respektive über Säure- oder Säureanhydridgruppen verfügt, die durch thermische oder radikalische Reaktion des Hauptkettenpolymers mit einem ungesättigten Dicarbonsäureanhydrid, einer ungesättigten Dicarbonsäure und/oder einem ungesättigten Dicarbonsäuremonoalkylester eingebracht wurden, vorzugsweise unter Einsatz wenigstens eines der folgenden Systeme: Acrylsäure, Methacrylsäure, Maleinsäure, Maleinsäureanhydrid, Maleinsäuremonobutylester, Fumarsäure, Aconitsäure, Glycidylacrylat, Glycidylmethacrylat, oder Itaconsäureanhydrid, bevorzugt in einer Konzentration im Bereich von 0.1 bis 6.0 Gew.-%, wobei das Ethylen-Vinylacetat-Copolymer bevorzugtermassen über eine Pfropfung in einem Bereich von 0.2-4.0 Gew.-%, insbesondere bevorzugt in einem Bereich von 0.5-2.5% Gew.-% verfügt, wobei die Gewichtsprozente jeweils auf die Gesamtmasse an Ethylen-Vinylacetat-Copolymer, inklusive Pfropfung, bezogen sind,
und/oder dass Komponente (E) zu weniger als 30%, besonders bevorzugt zu weniger als 10% verseift, vorzugsweise unverseift ist.

13. Polyamidformmasse nach einem der vorhergehenden Ansprüche, **dadurch gekennzeichnet, dass** Additive der Komponente (F) ausgewählt aus der folgenden Gruppe oder einer Mischung davon: Haftvermittler, Kristallisations-Beschleuniger oder -Verzögerer, Antioxidantien, Antiozonantien, Lichtschutzmitteln, Hitzestabilisatoren, einschliesslich Phenole, Phosphite, Kupferhalogenide, Ceroxidhydrate, Lathansalze, UV-Stabilisatoren, UV-Absorber, UV-Blocker, Gleitmittel, Entformungsmittel, Weichmacher, Verarbeitungshilfsmittel, Antistatika, anorganische und organische Pigmente, Farb- und Markierungsstoffe, Nanoteilchen in Plättchenform, Farbruss, bevorzugt in Form von Farbruss-Masterbatch (-Konzentrat), Residuen aus Polymerisationsverfahren wie Katalysatoren, Salze und deren Derivate, sowie Regler wie Monosäuren oder Monoamine, sauerstoff-, stickstoff- oder schwefelhaltige Metallverbindungen als Stabilisatoren, wobei Metalle wie Aluminium, Calcium, Barium, Natrium, Kalium, Magnesium und/oder Zink bevorzugt sind, und insbesondere bevorzugt Verbindungen ausgewählt aus der Gruppe der Oxide, Hydroxide, Carbonate, Silikate, Borate, Phosphate, Stannate sowie Kombinationen oder Mischungen dieser Verbindungen, wie Oxid-Hydroxide oder Oxid-Hydroxid-Carbonate sind, wobei vorzugsweise die Komponente (F) keine Leitfähigkeitsadditive enthält, vorzugsweise keine Russ- oder Graphitpartikel.

14. Formteil herstellbar oder hergestellt aus einer Formmasse nach einem der vorhergehenden Ansprüche, insbesondere hergestellt in einem Spritzgussverfahren, Extrusionsblasverfahren oder einem Extrusionsverfahren, vorzugsweise in Form einer Folie, eines Profils oder eines Hohlkörpers, oder Verbindungselement, einschliesslich Behälter, Leitungen, Steckverbindungselemente, Gehäuseteile, Befestigungselemente, Pumpenteile, Ventile, Verteiler, Deckel, Einspritzleisten, Einfüllstutzen, Pumpengehäuse, Kraftstofffiltergehäuse, insbesondere für den Automobilbereich einschliesslich solcher in Kontakt mit Chemikalien, insbesondere Treibstoff einschliesslich methanolhaltiger Treibstoff, Kühlmittel, Harnstoff, Öle.

15. Verwendung einer Polyamidformmasse nach einem der Ansprüche 1-13 vorzugsweise in Form eines Formteils nach Anspruch 14, im Automobilbereich, bevorzugt als Leitungselement für Kraftstoffe, einschliesslich Kraftstoffleitungen, Kraftstoffbehälter, Pumpen, Pumpenteile, Einspritzleisten, Ventile sowie Verbindungs- und Befestigungselemente dafür, insbesondere Quick-Konnektoren.

## Claims

1. Polyamide moulding composition consisting of the following components:
(A) 35 - 68% by weight of at least one partially crystalline, partially aromatic, thermoplastic polyamide having a melting temperature (Tm) of at least 270°C, measured according to ISO standard 11357-3 on the pellets at a heating rate of 20°C/min;
component (A) being composed of:
(A1) 25 - 100 mol-% terephthalic acid, based on the total content of dicarboxylic acids present,
0 - 75 mol-%, based on the total content of dicarboxylic acids present, of at least one dicarboxylic acid selected from the group: aromatic dicarboxylic acid other than terephthalic acid having 8 to 20 carbon atoms, aliphatic dicarboxylic acid having 6 to 36 carbon atoms, cycloaliphatic dicarboxylic acid having 8 to 20 carbon atoms, or a mixture thereof,
(A2) 50 - 100 mol-%, based on the total content of diamines present, of at least one aliphatic diamine having 4 - 8 carbon atoms,
0 - 50 mol-%, based on the total content of diamines present, of at least one diamine selected from the group: cycloaliphatic diamine having 6 to 20 carbon atoms, araliphatic diamine having 8 to 20 carbon atoms,
the percentage molar content of dicarboxylic acids being 100 mol% and the percentage molar content of diamines being 100 mol%,
and from:
(A3) 0 - 100 mol% of aminocarboxylic acids and/or lactams having 4 to 36 carbon atoms, preferably having 6 to 12 carbon atoms,
with the proviso that the concentration of (A3) is at most 40% by weight, based on the sum of (A1) to (A3),
(B) 13 - 22% by weight of carbon fibres;
(C) 18 - 30 wt.% glass fibres;
(D) 1 - 10% by weight of impact modifier other than (E) and/or polymers other than (A), (E) and (F);
(E) 0 - 10% by weight of ethylene-vinyl acetate copolymer;
(F) 0 - 3% by weight of additives
the sum of components (A)-(F) being 100 wt.%,
the sum of components (B)-(C) being in the range of from 33 to 48% by weight, and
the sum of components (D)-(E) being in the range of 1 to 12 wt.%.

2. Polyamide moulding composition according to claim 1, **characterized in that** the proportion of component (A) is in the range of 40 - 62.9% by weight, preferably in the range of 50 - 58.8% by weight;
or **in that** the proportion of component (B) is in the range of 14 - 20% by weight, preferably in the range of 15 - 18% by weight;
or **in that** the proportion of component (C) is in the range of 20 - 28% by weight, preferably in the range of 20 - 25% by weight
or **in that** the proportion of component (D) is in the range of 2 - 8% by weight, preferably in the range of 3 - 6% by weight;
or that the proportion of component (E) is in the range of 1 - 8% by weight, preferably in the range of 2 - 7 or 2 - 6% by weight;
or **in that** the proportion of component (F) is in the range of 0.1 - 2.0% by weight, preferably in the range of 0.2 - 1.5% by weight
or that the sum of components (B)-(C) is in the range of 34-45 wt.%, preferably in the range of 35-40 wt.%,
or the sum of components (D)-(E) is in the range of 2-10% by weight, preferably in the range of 3-9 or 4-9% by weight.

3. Polyamide moulding composition according to one of the preceding claims, **characterized in that** component (A) is a polyamide or a mixture of polyamides which has a melting temperature (Tm), measured according to ISO standard 11357-3 on the granules at a heating rate of 20°C/min, in the range from 280°C to 340°C, preferably in the range from 285°C to 330°C. preferably, when a mixture is present as component (A), not only the mixture having such a melting temperature, but also each of the individual components within (A);
and/or **in that** the enthalpy of fusion of component (A) is in the range from 30 to 70 J/g, in particular 40 to 65 J/g, wherein preferably, when a mixture is present as component (A), not only the mixture has such an enthalpy of fusion, but also each of the individual components within (A);
and/or **in that** component (A) has a solution viscosity, measured according to ISO 307 in m-cresol (0.5% by weight, 20°C), of ηrel less than 2.6, preferably of ηrel less than 2.3, in particular of ηrel less than 2.0, and of ηrel at least 1.4. preferably of ηrel at least 1.5, in particular of ηrel at least 1.55, wherein preferably, when a mixture is present as component (A), not only the mixture has such a solution viscosity, but also each of the individual components within (A).

4. A polyamide moulding composition according to any one of the preceding claims, **characterised in that** the polyamide or polyamides of component (A), preferably when component (A) is formed substantially only by a semi-crystalline semi-aromatic polyamide, is composed of:
(A1) 40 - 100 mol%, preferably 50 - 80 mol%, of terephthalic acid, based on the total content of dicarboxylic acids present,
0-60 mole %, preferably 20-50 mole %, based on the total content of dicarboxylic acids present, of at least one dicarboxylic acid selected from the group consisting of: aromatic dicarboxylic acid other than terephthalic acid, having from 8 to 20 carbon atoms, aliphatic dicarboxylic acid having from 6 to 36 carbon atoms, cycloaliphatic dicarboxylic acid having from 8 to 20 carbon atoms, or a mixture thereof,
(A2) 50 - 100 mol%, in particular preferably 80 - 100 mol%, based on the total content of diamines present, of at least one aliphatic diamine having 4 - 8, preferably 6, carbon atoms,
0 - 50 mol%, in particular preferably 0 - 20 mol%, based on the total content of diamines present, of at least one diamine selected from the group: cycloaliphatic diamine having 6 to 20 carbon atoms, araliphatic diamine having 8 to 20 carbon atoms,
the percentage molar content of dicarboxylic acids being 100 mol% and the percentage molar content of diamines being 100 mol%,
and from:
(A3) 0 - 100 mol% of aminocarboxylic acids and/or lactams having 4 to 36 carbon atoms, preferably having 6 to 12 carbon atoms,
with the proviso that the concentration of (A3) is at most 40% by weight,
preferably at most 30% by weight, in particular at most 20% by weight, based on the sum of (A1) to (A3).

5. Polyamide moulding composition according to one of the preceding claims, **characterized in that** the polyamide or polyamides of component (A) are selected from the following group: PA 4T/46, PA 4T/66, PA 4T/41, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/MPDT, PA 6T/6I/66, PA 6T/6I/6, PA 6T/6I/12, PA 6T/66/6, PA 6T/66/12, PA 6T/6I/MACMI, PA 6T/66/PACM6, or a mixture of such systems, preferably selected as PA 6T/6I, PA 6T/66,
the proportion of terephthalic acid in the component preferably being at least 50 mol%, preferably at least 52 mol%, more preferably at least 54 mol%, and very particularly preferably at least 62 mol%.

6. Polyamide moulding composition according to any one of the preceding claims, **characterized in that** component (A) is formed by at least one semi-crystalline polyamide 6T/6I having from 50 to 80 mol% of hexamethylene terephthalamide units and from 20 to 50 mol% of hexamethylene isophthalamide units, preferably with 55 to 75 mol% hexamethylene terephthalamide units and 25 to 45 mol% hexamethylene isophthalamide units, more preferably with 62 to 73 mol% hexamethylene terephthalamide units and 25 to 38 mol% hexamethylene isophthalamide units,
and/or **in that** component (A) is formed by at least one semi-crystalline polyamide 6T/66 having 50 to 80 mol% of hexamethylene terephthalamide units and 20 to 50 mol% of hexamethylene adipamide units, preferably having 50 to 65 mol% of hexamethylene terephthalamide units and 35 to 50 mol% of hexamethylene adipamide units, in particular preferably having 52 to 62 mol% of hexamethylene terephthalamide units and 38 to 48 mol% of hexamethylene adipamide units and/or **in that** component (A) is formed by at least one semicrystalline ternary polyamide 6T/6I/66 having 50 to 70 mol% of hexamethylene terephthalamide units, 5 to 45 mol% of hexamethylene isophthalamide units and 5 to 45 mol% of hexamethylene adipamide units,
and/or **in that** component (A) is formed by at least one 6T/6I/X containing at least 50 mol% of hexamethylene terephthalamide units, 0 to 40 mol% of hexamethylene isophthalamide units and 10 to 50 mol% of aliphatic units of the formula NH-(CH2)n-1-CO-, where n = 6, 11 or 12, or by a 6T/6I/X with at least 50 mol-% hexamethylene terephthalamide-, 10 to 30 mol-% hexamethylene isophthalamide- and 10 to 40 mol-% aliphatic units of the formula -NH-(CH2)n-1-CO-, where n is 6, 11 or 12, or by a 6T/61/X with 52 to 73 mol% of hexamethylene terephthalamide, 0 to 36 mol% of hexamethylene isophthalamide and 12 to 48 mol% of aliphatic units of the formula -NH-(CH2)n-1-CO-, where n is 6, 11 or 12, or by a 6T/6I/X containing 52 to 73 mol% of hexamethylene terephthalamide and 10 to 36 mol% of hexamethylene isophthalamide, 12 to 38 mol% of aliphatic units of the formula -NH-(CH2)n-1-CO-, where n is 6, 11 or 12.

7. Polyamide moulding composition according to any one of the preceding claims, **characterized in that** the component (B) fibres are in the form of chopped fibres or in the form of a chopped or endless fibre bundle,
or **in that** the fibres of component (B) have a length of 0.1 to 50 mm, preferably of 1 to 12 mm, and/or a diameter of 5 to 40 µm, in particular preferably of 5 to 10 µm,
or **in that** the fibres of component (B) are based on PAN-, pitch- or cellulose-based fibres,
or **in that** the fibres of component (B) are formed anisotropically or **in that** the fibres of component (B) are formed as carbon fibre bundles from several hundred to one hundred thousand individual filaments which have a diameter of 5 to 10 µm, a tensile strength of 1000 to 7000 MPa and a modulus of elasticity of 200 to 700 GPa.

8. Polyamide moulding composition according to one of the preceding claims, **characterised in that** the fibres of component (C) have a circular or non-circular cross-sectional area, wherein in the case of glass fibres with a non-circular cross-sectional area, those with a dimensional ratio of the main cross-sectional axis to the secondary cross-sectional axis perpendicular thereto of more than 2, preferably from 2 to 8, in particular from 2. 5 to 5 are preferably used, and/or wherein, in the case of glass fibres with a non-circular cross-sectional surface, the length of the main cross-sectional axis is preferably in the range from 6 to 40 µm, in particular in the range from 15 to 30 µm, and the length of the secondary cross-sectional axis is preferably in the range from 3 to 20 µm, in particular in the range from 4 to 10 µm.

9. Polyamide moulding composition according to one of the preceding claims, **characterised in that** the fibres of component (C) are glass fibres which are composed of the components silicon dioxide, calcium oxide, magnesium oxide and aluminium oxide or consist of these components and the weight ratio SiO2/(CaO+MgO) is less than 2. 7, preferably less than 2.5 and in particular between 2.1 and 2.4, and/or are glass fibres based on the ternary system silica-alumina-magnesia or on the quaternary system silica-alumina-magnesia-calcium oxide, wherein a composition of 58-70 wt.% silica (SiO2), calcium oxide, magnesium oxide and aluminium oxide is used. % by weight of silicon dioxide (SiO2), 15-30 % by weight of aluminium oxide (Al2O3), 5-15 % by weight of magnesium oxide (MgO), 0-10 % by weight of calcium oxide (CaO) and 0-2 % by weight of further oxides, in particular zirconium dioxide (ZrO2), boron oxide (B2O3), titanium dioxide (TiO2) or lithium oxide (Li2O),
and/or **in that** the fibres of component (C) are glass fibres of circular cross-section with a diameter in the range of 5-20 µm, preferably in the range of 6-17 µm and particularly preferably in the range of 6-13 µm, these preferably being used as short glass fibres, in particular as chopped glass with a length of 0.2 to 20 mm, preferably 2-12 mm.

10. Polyamide moulding composition according to one of the preceding claims, **characterized in that** component (D), if selected as impact modifier different from (E), is selected from the following group: natural rubber, graft rubber, homopolymers or copolymers of olefins and/or styrenes and their derivatives and/or acrylates and their derivatives and/or vinyl acetates and their derivatives and/or anhydrides, wherein the systems may be ungrafted or grafted, in particular (block) copolymers based on at least one or a combination of the following building blocks: Polybutadiene, polyisoprene, polyisobutylene, copolymer of butadiene and/or isoprene with styrene or styrene derivatives and other comonomers, hydrogenated copolymers and or copolymers obtained by grafting or copolymerisation with acid anhydrides, (meth)acrylic acid and their esters, styrene-based block copolymers, ethylene-α-olefin copolymers, ethylene-acrylate or ethylene-butylene-acrylate copolymers, ethylene, propylene, butene-1, including copolymers of olefins and copolymerisable monomers, such as in particular (meth)acrylic acid esters and methylhexadiene, it also being possible for these systems to be present as ionomers in which the polymer-bound carboxyl groups are linked to one another wholly or partially by metal ions,
the following systems being particularly preferred: copolymers of butadiene with styrene functionalised by grafting with maleic anhydride, non-polar or polar olefin homopolymers and copolymers formed by grafting with maleic anhydride and carboxylic acid-functionalised copolymers such as poly(ethene-co-(meth)arylic acid) or poly(ethene-co-1-olefin-co-(meth)acrylic acid) in which the acid groups are partially neutralised with metal ions.

11. Polyamide moulding composition according to one of the preceding claims, **characterized in that** component (D), if selected as a polymer different from (A), (E) and (F), is selected from the following group: aliphatic polyamide, preferably selected from the group PA 6, PA 46, PA 56, PA 66, PA 66/6, PA 69, PA 610, PA 612, PA 614, and polyolefin. PA 6, PA 66 and LDPE are particularly preferred.

12. Polyamide moulding composition according to one of the preceding claims, **characterized in that** component (E) is an ethylene-vinyl acetate copolymer having a vinyl acetate content of 5-35%, preferably 8-25%, more preferably 10-20%, the percentages in each case being based on the total mass of ethylene-vinyl acetate copolymer, including any grafting present,
and/or **in that** component (E) preferably has a molar mass in the range from 20,000 to 500,000 g/mol, in particular preferably in the range from 30,000 to 300,000 g/mol,
and/or **in that** component (E) is grafted or has acid or acid anhydride groups which have been introduced by thermal or free-radical reaction of the main chain polymer with an unsaturated dicarboxylic acid anhydride, an unsaturated dicarboxylic acid and/or an unsaturated dicarboxylic acid monoalkyl ester, preferably using at least one of the following systems: acrylic acid, methacrylic acid, maleic acid, maleic anhydride, maleic acid monobutyl ester, fumaric acid, aconitic acid, glycidyl acrylate, glycidyl methacrylate, or itaconic anhydride, preferably in a concentration in the range of 0.1 to 6.0% by weight. %, the ethylene-vinyl acetate copolymer preferably having a grafting in a range of 0.2-4.0 % by weight, in particular preferably in a range of 0.5-2.5 % by weight, the percentages by weight in each case being based on the total mass of ethylene-vinyl acetate copolymer, including grafting,
and/or **in that** component (E) is saponified to the extent of less than 30%, particularly preferably less than 10%, preferably unsaponified.

13. Polyamide moulding composition according to any one of the preceding claims, **characterized in that** additives of component (F) are selected from the following group or a mixture thereof: Adhesion promoters, crystallisation accelerators or retarders, antioxidants, antiozonants, light stabilisers, heat stabilisers including phenols, phosphites, copper halides, cerium oxide hydrates, lathane salts, UV stabilisers, UV absorbers, UV blockers, slip agents, mould release agents, plasticisers, processing aids, antistatic agents, inorganic and organic pigments, colouring and marking agents, nanoparticles in platelet form, colouring black, preferably in the form of colouring black masterbatch (-concentrate), residues from polymerisation processes such as catalysts, salts and their derivatives, as well as regulators such as monoacids or monoamines, oxygen-, nitrogen- or sulphur-containing metal compounds as stabilisers, metals such as aluminium, calcium, barium, sodium, potassium, magnesium and/or zinc being preferred, and in particular preferably compounds selected from the group of oxides, hydroxides, carbonates, silicates, borates, phosphates, stannates and combinations or mixtures of these compounds, such as oxide-hydroxides or oxide-hydroxide-carbonates, wherein preferably component (F) does not contain any conductivity additives, preferably no carbon black or graphite particles.

14. Moulding producible or produced from a moulding composition according to one of the preceding claims, in particular produced in an injection moulding process, extrusion blow moulding process or an extrusion process, preferably in the form of a film, a profile or a hollow body, or connecting element, including containers, conduits, connector elements, housing parts, fastening elements, pump parts, valves, distributors, covers, injection bars, filler necks, pump housings, fuel filter housings, in particular for the automotive sector including those in contact with chemicals, in particular fuel including fuel containing methanol, coolants, urea, oils.

15. Use of a polyamide moulding composition according to one of the claims 1 - 13.
preferably in the form of a moulding according to claim 14, in the automotive sector, preferably as a conduit element for fuels, including fuel lines, fuel tanks, pumps, pump parts, injection manifolds, valves and connecting and fastening elements therefor, in particular quick connectors.

## Revendications

1. Composition de moulage en polyamide constituée des composants suivants :
(A) 35 à 68% en poids d'au moins un polyamide thermoplastique partiellement cristallin, partiellement aromatique, ayant une température de fusion (Tm) d'au moins 270°C, mesurée selon la norme ISO 11357-3 sur les pastilles à une vitesse de chauffage de 20°C/min ;
le composant (A) étant composé de :
(A1) 25 - 100 % en moles d'acide téréphtalique, par rapport à la teneur totale en acides dicarboxyliques présents,
0 - 75 % en moles, par rapport à la teneur totale en acides dicarboxyliques présents, d'au moins un acide dicarboxylique choisi dans le groupe : acide dicarboxylique aromatique autre que l'acide téréphtalique ayant 8 à 20 atomes de carbone, acide dicarboxylique aliphatique ayant 6 à 36 atomes de carbone, acide dicarboxylique cycloaliphatique ayant 8 à 20 atomes de carbone, ou un mélange de ceux-ci,
(A2) 50 à 100 % en moles, par rapport à la teneur totale en diamines présentes, d'au moins une diamine aliphatique ayant 4 à 8 atomes de carbone,
0 - 50 % en moles, par rapport à la teneur totale en diamines présentes, d'au moins une diamine choisie dans le groupe : diamine cycloaliphatique ayant 6 à 20 atomes de carbone, diamine araliphatique ayant 8 à 20 atomes de carbone,
la teneur molaire en pourcentage des acides dicarboxyliques étant de 100 % en moles et la teneur molaire en pourcentage des diamines étant de 100 % en moles,
et de :
(A3) 0 à 100 % en moles d'acides aminocarboxyliques et/ou de lactames ayant de 4 à 36 atomes de carbone, de préférence de 6 à 12 atomes de carbone,
à condition que la concentration de (A3) soit au maximum de 40% en poids, par rapport à la somme de (A1) à (A3),
(B) 13 - 22% en poids de fibres de carbone ;
(C) 18 - 30 % en poids de fibres de verre ;
(D) 1 - 10% en poids de modificateur de choc autre que (E) et/ou de polymères autres que (A), (E) et (F) ;
(E) 0 - 10 % en poids de copolymère éthylène-acétate de vinyle ;
(F) 0 - 3% en poids d'additifs
la somme des composants (A)-(F) étant de 100 % en poids,
la somme des composants (B)-(C) étant dans la gamme de 33 à 48% en poids, et
la somme des composants (D)-(E) étant dans la gamme de 1 à 12 % en poids.

2. Composition de moulage en polyamide selon la revendication 1, **caractérisée en ce que** la proportion du composant (A) est dans la gamme de 40 - 62.9% en poids, de préférence dans la gamme de 50 - 58,8% en poids ;
ou **en ce que** la proportion du composant (B) est dans la gamme de 14 à 20% en poids, de préférence dans la gamme de 15 à 18% en poids ;
ou **en ce que** la proportion du composant (C) est dans la gamme de 20 à 28% en poids, de préférence dans la gamme de 20 à 25% en poids.
ou **en ce que** la proportion du composant (D) est dans la gamme de 2 à 8 % en poids, de préférence dans la gamme de 3 à 6 % en poids ;
ou **en ce que** la proportion du composant (E) est dans la gamme de 1 à 8 % en poids, de préférence dans la gamme de 2 à 7 ou 2 à 6 % en poids ;
ou **en ce que** la proportion du composant (F) est dans la gamme de 0,1 - 2.0 % en poids, de préférence dans la gamme de 0,2 - 1,5 % en poids.
ou **en ce que** la somme des composants (B)-(C) est dans la gamme de 34-45% en poids, de préférence dans la gamme de 35-40% en poids,
ou que la somme des composants (D)-(E) est dans la gamme de 2-10% en poids, de préférence dans la gamme de 3-9 ou 4-9% en poids.

3. Composition de moulage en polyamide selon l'une des revendications précédentes, **caractérisée en ce que** le composant (A) est un polyamide ou un mélange de polyamides qui a une température de fusion (Tm), mesurée selon la norme ISO 11357-3 sur les granulés à une vitesse de chauffage de 20°C/min, dans la gamme de 280°C à 340°C, de préférence dans la gamme de 285°C à 330°C, de préférence, lorsqu'un mélange est présent en tant que composant (A), non seulement le mélange ayant une telle température de fusion, mais également chacun des composants individuels au sein de (A) ;
et/ou **en ce que** l'enthalpie de fusion du composant (A) est comprise entre 30 et 70 J/g, en particulier entre 40 et 65 J/g, de préférence, lorsqu'un mélange est présent en tant que composant (A), non seulement le mélange a une telle enthalpie de fusion, mais également chacun des composants individuels dans (A) ;
et/ou **en ce que** le composant (A) a une viscosité en solution, mesurée selon la norme ISO 307 dans le m-crésol (0,5% en poids, 20°C), de ηrel inférieure à 2,6, de préférence de ηrel inférieure à 2,3, en particulier de ηrel inférieure à 2.0, et de ηrel d'au moins 1,4, de préférence de ηrel d'au moins 1,5, en particulier de ηrel d'au moins 1,55, où de préférence, lorsqu'un mélange est présent en tant que composant (A), non seulement le mélange a une telle viscosité en solution, mais également chacun des composants individuels dans (A).

4. Composition de moulage en polyamide selon l'une quelconque des revendications précédentes, **caractérisée en ce que** le ou les polyamides du composant (A), de préférence lorsque le composant (A) est formé essentiellement uniquement par un polyamide semi-aromatique semi-cristallin, est composé de :
(A1) 40 à 100 % en moles, de préférence 50 à 80 % en moles, d'acide téréphtalique, par rapport à la teneur totale en acides dicarboxyliques présents,
0 à 60 % en moles, de préférence 20 à 50 % en moles, par rapport à la teneur totale en acides dicarboxyliques présents, d'au moins un acide dicarboxylique choisi dans le groupe constitué par : un acide dicarboxylique aromatique autre que l'acide téréphtalique, ayant de 8 à 20 atomes de carbone, un acide dicarboxylique aliphatique ayant de 6 à 36 atomes de carbone, un acide dicarboxylique cycloaliphatique ayant de 8 à 20 atomes de carbone, ou un mélange de ceux-ci, (A2) 50 à 100 % en moles, en particulier de préférence 80 à 100 % en moles, par rapport à la teneur totale en diamines présentes, d'au moins une diamine aliphatique ayant de 4 à 8, de préférence 6, atomes de carbone,
0 - 50 % en moles, en particulier de préférence 0 - 20 % en moles, par rapport à la teneur totale en diamines présentes, d'au moins une diamine choisie dans le groupe : diamine cycloaliphatique ayant 6 à 20 atomes de carbone, diamine araliphatique ayant 8 à 20 atomes de carbone,
la teneur molaire en pourcentage des acides dicarboxyliques étant de 100 % en moles et la teneur molaire en pourcentage des diamines étant de 100 % en moles, et de :
(A3) 0 à 100 % en moles d'acides aminocarboxyliques et/ou de lactames ayant de 4 à 36 atomes de carbone, de préférence de 6 à 12 atomes de carbone.
à condition que la concentration de (A3) soit au maximum de 40% en poids, de préférence au maximum de 30% en poids, en particulier au maximum de 20% en poids, par rapport à la somme de (A1) à (A3).

5. Composition de moulage en polyamide selon l'une des revendications précédentes, **caractérisée en ce que** le ou les polyamides du composant (A) sont choisis dans le groupe suivant : PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6. PA 6T/MPDI, PA 6T/MPDT, PA 6T/6I/66, PA 6T/6I/6, PA 6T/6I/12, PA 6T/66/6, PA 6T/66/12, PA 6T/6I/MACMI, PA 6T/66/PACM6, ou un mélange de ces systèmes, de préférence choisis parmi PA 6T/6I, PA 6T/66,
la proportion d'acide téréphtalique dans la composition de moulage de polyamide étant de préférence d'au moins 50 % en moles, de préférence d'au moins 52 % en moles, plus préférablement d'au moins 54 % en moles, et tout particulièrement d'au moins 62 % en moles.

6. Composition de moulage en polyamide selon l'une quelconque des revendications précédentes, **caractérisée en ce que** le composant (A) est formé par au moins un polyamide 6T/6I semi-cristallin comportant de 50 à 80 % en moles de motifs hexaméthylène téréphtalamide et de 20 à 50 % en moles de motifs hexaméthylène isophtalamide, de préférence avec 55 à 75 % en moles d'unités d'hexaméthylène téréphtalamide et 25 à 45 % en moles d'unités d'hexaméthylène isophtalamide, plus préférablement avec 62 à 73 % en moles d'unités d'hexaméthylène téréphtalamide et 25 à 38 % en moles d'unités d'hexaméthylène isophtalamide, et/ou **en ce que** le composant (A) est formé par au moins un polyamide 6T/66 semi-cristallin avec 50 à 80 % en moles d'unités d'hexaméthylène téréphtalamide et 20 à 50 % en moles d'unités d'hexaméthylène adipamide, de préférence avec 50 à 65 % en moles d'unités d'hexaméthylène téréphtalamide et 35 à 50 % en moles d'unités d'hexaméthylène adipamide, en particulier de préférence avec 52 à 62 % en moles d'unités d'hexaméthylène téréphtalamide et 38 à 48 % en moles d'unités d'hexaméthylène adipamide
et/ou **en ce que** le composant (A) est formé par au moins un polyamide ternaire semi-cristallin 6T/6I/66 ayant 50 à 70 % en moles d'unités d'hexaméthylène téréphtalamide, 5 à 45 % en moles d'unités d'hexaméthylène isophtalamide et 5 à 45 % en moles d'unités d'hexaméthylène adipamide,
et/ou **en ce que** le composant (A) est formé par au moins un 6T/6I/X contenant au moins 50 % en moles d'unités d'hexaméthylène téréphtalamide, 0 à 40 % en moles d'unités d'hexaméthylène isophtalamide et 10 à 50 % en moles d'unités aliphatiques de formule NH-(CH2)n-1-CO-, dans laquelle n = 6, 11 ou 12, ou par un 6T/6I/X avec au moins 50 % en moles de motifs hexaméthylène téréphtalamide, 10 à 30 % en moles de motifs hexaméthylène isophtalamide et 10 à 40 % en moles de motifs aliphatiques de formule -NH-(CH2)n-1-CO-, dans laquelle n est égal à 6, 11 ou 12, ou par un 6T/6I/X avec 52 à 73% en moles d'hexaméthylène téréphtalamide, 0 à 36% en moles d'hexaméthylène isophtalamide et 12 à 48% en moles de motifs aliphatiques de formule -NH-(CH2)n-1-CO-, dans laquelle n est égal à 6, 11 ou 12, ou par un 6T/6I/X contenant 52 à 73 % en moles d'hexaméthylène téréphtalamide et 10 à 36 % en moles d'hexaméthylène isophtalamide, 12 à 38 % en moles de motifs aliphatiques de formule -NH-(CH2)n-1-CO-, où n est égal à 6, 11 ou 12.

7. Composition de moulage en polyamide selon l'une quelconque des revendications précédentes, **caractérisée en ce que** les fibres du composant (B) sont sous forme de fibres coupées ou sous forme de faisceau de fibres coupées ou sans fin,
ou **en ce que** les fibres du composant (B) ont une longueur de 0,1 à 50 mm, de préférence de 1 à 12 mm, et/ou un diamètre de 5 à 40 µm, notamment de préférence de 5 à 10 µm,
ou **en ce que** les fibres du composant (B) sont à base de fibres de PAN, de brai ou
de cellulose,
ou **en ce que** les fibres du composant (B) sont formées de manière anisotrope ou **en ce que** les fibres du composant (B) sont formées comme des faisceaux de fibres de carbone de plusieurs centaines à cent mille filaments individuels qui ont un diamètre de 5 à 10 µm, une résistance à la traction de 1000 à 7000 MPa et un module d'élasticité de 200 à 700 GPa.

8. Composition de moulage en polyamide selon l'une des revendications précédentes, **caractérisée en ce que** les fibres du composant (C) présentent une surface de section transversale circulaire ou non circulaire, en utilisant de préférence, dans le cas de fibres de verre à surface de section transversale non circulaire, celles dont le rapport dimensionnel entre l'axe principal de la section transversale et l'axe secondaire de la section transversale qui lui est perpendiculaire est supérieur à 2, de préférence de 2 à 8, en particulier de 2. 5 à 5 sont de préférence utilisées, et/ou dans lequel, dans le cas de fibres de verre avec une surface de section transversale non circulaire, la longueur de l'axe de section transversale principal est de préférence dans la gamme de 6 à 40 µm, en particulier dans la gamme de 15 à 30 µm, et la longueur de l'axe de section transversale secondaire est de préférence dans la gamme de 3 à 20 µm, en particulier dans la gamme de 4 à 10 µm.

9. Composition de moulage en polyamide selon l'une des revendications précédentes, **caractérisée en ce que** les fibres du composant (C) sont des fibres de verre qui sont composées des composants dioxyde de silicium, oxyde de calcium, oxyde de magnésium et oxyde d'aluminium ou sont constituées de ces composants et le rapport pondéral SiO2/(CaO+MgO) est inférieur à 2. 7, de préférence moins de 2,5 et en particulier entre 2,1 et 2,4, et/ou sont des fibres de verre à base du système ternaire silice-alumine-magnésie ou du système quaternaire silice-alumine-magnésie-oxyde de calcium, dans lequel on utilise une composition de 58-70 % en poids de silice (SiO2), d'oxyde de calcium, d'oxyde de magnésium et d'oxyde d'aluminium. % en poids de dioxyde de silicium (SiO2), 15-30 % en poids d'oxyde d'aluminium (Al2O3), 5-15 % en poids d'oxyde de magnésium (MgO), 0-10 % en poids d'oxyde de calcium (CaO) et 0-2 % en poids d'autres oxydes, notamment le dioxyde de zirconium (ZrO2), l'oxyde de bore (B2O3), le dioxyde de titane (TiO2) ou l'oxyde de lithium (Li2O),
et/ou **en ce que** les fibres du composant (C) sont des fibres de verre de section circulaire dont le diamètre est compris entre 5 et 20 µm, de préférence entre 6 et 17 µm et tout particulièrement entre 6 et 13 µm, celles-ci étant de préférence utilisées sous forme de fibres de verre courtes, notamment sous forme de verre haché d'une longueur de 0,2 à 20 mm, de préférence de 2 à 12 mm.

10. Composition de moulage en polyamide selon l'une des revendications précédentes, **caractérisée en ce que** le composant (D), s'il est choisi comme modificateur de choc différent de (E), est choisi dans le groupe suivant :
caoutchouc naturel, caoutchouc greffé, homopolymères ou copolymères d'oléfines et/ou de styrènes et de leurs dérivés et/ou d'acrylates et de leurs dérivés et/ou d'acétates de vinyle et de leurs dérivés et/ou d'anhydrides, les systèmes pouvant être non greffés ou greffés, notamment les copolymères (blocs) à base d'au moins un ou d'une combinaison des blocs de construction suivants : Polybutadiène, polyisoprène, polyisobutylène, copolymère de butadiène et/ou d'isoprène avec du styrène ou des dérivés du styrène et d'autres comonomères, copolymères hydrogénés et/ou copolymères obtenus par greffage ou copolymérisation avec des anhydrides d'acide, l'acide (méth)acrylique et leurs esters, copolymères séquencés à base de styrène, copolymères éthylène-α-oléfine, les copolymères éthylène-acrylate ou éthylène-butylène-acrylate, l'éthylène, le propylène, le butène-1, y compris les copolymères d'oléfines et de monomères copolymérisables, tels que notamment les esters de l'acide (méth)acrylique et le méthylhexadiène, ces systèmes pouvant également se présenter sous forme d'ionomères dans lesquels les groupes carboxyle liés au polymère sont liés entre eux totalement ou partiellement par des ions métalliques,
les systèmes suivants étant particulièrement préférés : copolymères de butadiène et de styrène fonctionnalisés par greffage d'anhydride maléique, homopolymères et copolymères d'oléfines non polaires ou polaires formés par greffage d'anhydride maléique et copolymères fonctionnalisés par des acides carboxyliques tels que le poly(éthène-co-acide (méth)arylique) ou le poly(éthène-co-1-oléfine-co-acide (méth)acrylique) dans lesquels les groupes acides sont partiellement neutralisés par des ions métalliques.

11. Composition de moulage en polyamide selon l'une des revendications précédentes, **caractérisée en ce que** le composant (D), s'il est choisi comme un polymère différent de (A), (E) et (F), est choisi dans le groupe suivant : polyamide aliphatique, de préférence choisi dans le groupe PA 6, PA 46, PA 56, PA 66, PA 66/6, PA 69, PA 610, PA 612, PA 614, et polyoléfine. Le PA 6, le PA 66 et le LDPE sont particulièrement préférés.

12. Composition de moulage en polyamide selon l'une des revendications précédentes, **caractérisée en ce que** le composant (E) est un copolymère éthylène-acétate de vinyle ayant une teneur en acétate de vinyle de 5-35%, de préférence de 8-25%, plus préférablement de 10-20%, les pourcentages étant dans chaque cas basés sur la masse totale du copolymère éthylène-acétate de vinyle, y compris tout greffage présent,
et/ou **en ce que** le composant (E) a de préférence une masse molaire dans la gamme de 20.000 à 500.000 g/mol, en particulier de préférence dans la gamme de 30.000 à 300.000 g/mol,
et/ou **en ce que** le composant (E) est greffé ou présente des groupes acide ou anhydride d'acide qui ont été introduits par réaction thermique ou radicalaire du polymère à chaîne principale avec un anhydride d'acide dicarboxylique insaturé, un acide dicarboxylique insaturé et/ou un ester monoalkylique d'acide dicarboxylique insaturé, de préférence en utilisant au moins un des systèmes suivants : acide acrylique, acide méthacrylique, acide maléique, anhydride maléique, ester monobutylique d'acide maléique, acide fumarique, acide aconitique, acrylate de glycidyle, méthacrylate de glycidyle ou anhydride itaconique, de préférence à une concentration comprise entre 0. 1 à 6,0 % en poids. %, le copolymère éthylène-acétate de vinyle présentant de préférence un greffage dans une plage de 0,2 à 4,0 % en poids, en particulier de préférence dans une plage de 0,5 à 2,5 % en poids, les pourcentages en poids étant dans chaque cas basés sur la masse totale du copolymère éthylène-acétate de vinyle, y compris le greffage,
et/ou **en ce que** le composant (E) est saponifié dans une proportion inférieure à 30 %, de manière particulièrement préférée inférieure à 10 %, de préférence non saponifié.

13. Composition de moulage en polyamide selon l'une quelconque des revendications précédentes, **caractérisée en ce que** les additifs du composant (F) sont choisis dans le groupe suivant ou un mélange de ceux-ci : Promoteurs d'adhésion, accélérateurs ou retardateurs de cristallisation, antioxydants, antiozonants, stabilisateurs à la lumière, stabilisateurs à la chaleur, y compris phénols, phosphites, halogénures de cuivre, hydrates d'oxyde de cérium, sels de lathane, stabilisateurs UV, absorbeurs UV, bloqueurs UV, agents de glissement, agents de démoulage, plastifiants, des auxiliaires technologiques, des agents antistatiques, des pigments inorganiques et organiques, des agents de coloration et de marquage, des nanoparticules sous forme de plaquettes, du noir colorant, de préférence sous forme de mélange-maître de noir colorant (-concentré), des résidus des processus de polymérisation tels que les catalyseurs, les sels et leurs dérivés, ainsi que les régulateurs tels que les monoacides ou les monoamines, les composés métalliques contenant de l'oxygène, de l'azote ou du soufre comme stabilisateurs, les métaux tels que l'aluminium, le calcium, le baryum, le sodium, le potassium, le magnésium et/ou le zinc étant préférés, et en particulier les composés choisis dans le groupe des oxydes, les hydroxydes, les carbonates, les silicates, les borates, les phosphates, les stannates et les combinaisons ou mélanges de ces composés, tels que les oxydes-hydroxydes ou les oxydes-hydroxydes-carbonates, le composant (F) ne contenant de préférence aucun additif de conductivité, de préférence pas de noir de carbone ni de particules de graphite.

14. Pièce moulée pouvant être fabriquée ou produite à partir d'une composition de moulage selon l'une des revendications précédentes, en particulier fabriquée dans un procédé de moulage par injection, un procédé d'extrusion-soufflage ou un procédé d'extrusion, de préférence sous la forme d'une feuille, d'un profilé ou d'un corps creux, ou élément de liaison, y compris les récipients, les conduits, les éléments de raccordement, les parties de boîtier, les éléments de fixation, les parties de pompe, les soupapes, les distributeurs, les couvercles, les barres d'injection, les goulots de remplissage, les boîtiers de pompe, les boîtiers de filtre à carburant, en particulier pour le secteur automobile, y compris ceux en contact avec des produits chimiques, en particulier le carburant, y compris le carburant contenant du méthanol, les liquides de refroidissement, l'urée, les huiles.

15. Utilisation d'une composition de moulage de polyamide en polyamide selon l'une des revendications 1 - 13, de préférence sous la forme d'une pièce moulée selon la revendication 14, dans le secteur automobile, de préférence comme élément de conduite pour les carburants, y compris les conduites de carburant, les réservoirs de carburant, les pompes, les pièces de pompe, les collecteurs d'injection, les soupapes et les éléments de connexion et de fixation pour ceux-ci, en particulier les connecteurs rapides.
